# EUROPEAN PATENT APPLICATION

(11) **EP 4 841 801 A1**
(43) Date of publication of application: **18.11.2026**
(21) Application number: 25846504.6
(22) Date of filing: 25.04.2025
(51) Int. Cl.: H01M 50/531, H01M 4/13, H01M 10/0562

(54) **SOLID-STATE BATTERY CORE, SOLID-STATE BATTERY CELL, SOLID-STATE BATTERY AND ELECTRICAL APPARATUS**

(30) Priority: 31.07.2024 CN 202421840327 U
(71) Applicant: Contemporary Amperex Technology Co., Limited, Ningde, Fujian 352100 (CN)
(72) Inventor: LIAO, Kejun, Ningde, Fujian 352100 (CN); ZENG, Zipeng, Ningde, Fujian 352100 (CN); HU, Bobing, Ningde, Fujian 352100 (CN); XUAN, Minjie, Ningde, Fujian 352100 (CN); WU, Kai, Ningde, Fujian 352100 (CN)
(74) Representative: Lorenz Seidler Gossel Part. mbB
(86) International application number: PCT/CN2025/091333
(87) International publication number: WO 2026/026056

(57) **Abstract**

The present application relates to a solid-state battery core, a solid-state battery cell, a solid-state battery and an electrical apparatus. The solid-state battery core comprises a positive electrode part, a solid electrolyte part and a negative electrode part which are stacked, the positive electrode part and the negative electrode part being separated by the solid electrolyte part. The positive electrode part comprises a positive electrode body and a positive tab part connected to the positive electrode body, and the negative electrode part comprises a negative electrode body and a negative tab part connected to the negative electrode body. At least one side edge extending in the width direction of the solid-state battery core, the solid-state battery core is provided with a first composite slot and a second composite slot, the first composite slot being used for accommodating at least part of the positive tab part, and the second composite slot being used for accommodating at least part of the negative tab part.

## Description

### CROSS-REFERENCE TO RELATED APPLICATIONS

The present application claims priority to Chinese Patent Application No. CN2024218403275, filed on July 31, 2024 and entitled "Solid-State Battery Core, Solid-State Battery Cell, Solid-State Battery And Electrical Apparatus", which is incorporated herein by reference in its entirety.

### TECHNICAL FIELD

The present application relates to the technical field of solid-state batteries, and in particular, to a solid-state battery core, a solid-state battery cell, a solid-state battery and an electrical apparatus.

### BACKGROUND

The statement here merely provides the background information related to the present application and does not necessarily constitute the prior art.

The solid-state battery uses a non-flammable solid electrolyte to replace the organic electrolyte in the traditional liquid secondary battery, so that the safety of the battery is greatly improved, and the solid-state battery is considered as a new generation battery that is the most recent to industrialization. Further improvement of the energy density is of great significance for promoting the industrialization of solid-state batteries.

### SUMMARY

According to various implementations and various embodiments of the present application, the present application provides a solid-state battery core, a solid-state battery cell, a solid-state battery and an electrical apparatus. The solid-state battery core may be used to increase the energy density of the battery.

In a first aspect of the present application, provided is a solid-state battery core, which is provided with an active expansion region.

In some implementations, the present application provides a solid-state battery core, including a positive electrode part, a solid electrolyte part and a negative electrode part which are stacked, where the positive electrode part and the negative electrode part are separated by the solid electrolyte part; the positive electrode part includes a positive electrode body and a positive tab part connected to the positive electrode body, and the negative electrode part includes a negative electrode body and a negative tab part connected to the negative electrode body;
a height direction of the solid-state battery core is denoted as a Y direction, a width direction of the solid-state battery core is denoted as an X direction, and a thickness direction of the solid-state battery core is denoted as a Z direction; the X direction, the Y direction, and the Z direction are perpendicular to each other;
at least one edge extending in the X direction, the solid-state battery core is provided with two composite slots, which are respectively denoted as a first composite slot and a second composite slot; and the first composite slot is configured to accommodate at least a part of the positive tab part, and the second composite slot is configured to accommodate at least a part of the negative tab part.

The solid-state battery core is provided with the first composite slot at the positive tab part for bending the positive tab inward, and a second composite slot at the negative tab part for bending the negative tab inward, and at this time, the active expansion region is disposed in a region that is consistent with the first composite slot and the second composite slot in height and is located outside the first composite slot and the second composite slot in the width direction of the solid-state battery core; that is, in the width direction of the solid-state battery core, the solid-state battery core is provided with an active expansion region with the same height as the first composite slot and the second composite slot in the space region other than the positive tab part and the negative tab part, so that the solid-state battery core can better utilize the space at the tab, thereby greatly increasing the space volume occupied by the electrode part in the solid-state battery core, and significantly improving the volumetric energy density of the solid-state battery core and the solid-state battery. The two composite slots can also provide protection for the tab part and reduce the risk of tab breakage.

In the solid-state battery core, an active region that is consistent with the first composite slot and the second composite slot in height in the Y direction and is located outside the first composite slot and the second composite slot in the X direction is denoted as an active expansion region.

In some implementations, a height of the positive electrode body at the active expansion region is higher than a height of the positive electrode body at the first composite slot, and a height of the negative electrode body at the active expansion region is higher than a height of the negative electrode body at the second composite slot;
a height of the positive electrode body in the Y direction is denoted as H_{P}, a height of the negative electrode body in the Y direction is denoted as H_{N}, and a height of the solid-state battery core in the Y direction is denoted as H₀; a height region of the solid-state battery core provided with the two composite slots in the Y direction is recorded as an active expansion region, and a maximum height of the active expansion region in the Y direction is denoted as H_{Δ}, satisfying H_{Δ}>0; and H_{P}>(H₀-H_{Δ}) and H_{N}>(H₀-H_{Δ}).

In the foregoing solid-state battery core structure, the height of the positive electrode body at the active expansion region is higher than the height of the positive electrode body at the first composite slot, and the height of the negative electrode body at the active expansion region is higher than the height of the negative electrode body at the second composite slot, so that the solid-state battery core can better utilize the space at the tab, thereby greatly increasing the space volume occupied by the electrode part in the solid-state battery core, and significantly improving the volumetric energy density of the solid-state battery core and the solid-state battery.

In some implementations, H_{N} is equal to H₀. In this case, the electrode active material layer may be disposed by utilizing the space at the tab as much as possible, thereby improving the volumetric energy density of the solid-state battery core and the solid-state battery as much as possible.

In some implementations, a utilization ratio of the active expansion region in the Y direction is ψ_{Y}= H_{Δ}/H₀×100%;
the solid-state battery core satisfies one or more of the following features:${H}_{Δ} \geq 0.05 mm ;$${ψ}_{Y} \geq 0.05 % .$

In some implementations, the solid-state battery core satisfies one or more of the following features:$0.05 mm \leq {H}_{Δ} \leq 1 mm ;$ and$0.1 % \leq {ψ}_{Y} \leq 2 % .$

By controlling one or two of the height parameter h_{Δ} and the utilization ratio parameter ψ_{Y} of the active expansion region within the foregoing ranges, it is beneficial to better utilizing the space in the height direction at the position of the tab.

In some implementations, a width of the solid-state battery core in the X direction is denoted as W₀, a width of the active expansion region in the X direction is denoted as W_{Δ}, and a utilization ratio of the active expansion region in the X direction is ψ_{X}= W_{Δ}/W₀×100%;
the solid-state battery core satisfies one or more of the following features:${H}_{Δ} \geq 50 mm ;$ and$ψ x \geq 60 % .$

In some implementations, the solid-state battery core satisfies one or more of the following features:$50 mm \leq {H}_{Δ} \leq 1000 mm ;$ and
60%≤ψ_{X}≤95%.

By controlling one or two of the width parameter w_{Δ} and the utilization ratio parameter ψ_{X} of the active expansion region within the foregoing ranges, it is beneficial to better utilizing the space in the width direction at the tab position.

In some implementations, a projection area of the solid-state battery core in the Z direction is denoted as A₀, a projection area of the active expansion region in the Z direction is denoted as A_{Δ}, and a two dimensional utilization ratio of the active expansion region is ψ_{A}=A_{Δ}/A₀×100%; and
the solid-state battery core satisfies: ψ_{A}≥0.04%.

In some implementations, the solid-state battery core satisfies: 0.04%≤ψ_{A}≤1.5%.

By controlling the two dimensional utilization ratio ψ_{A} of the active expansion region within the foregoing range, it is beneficial to better comprehensively utilizing the idle space at the tab.

In some implementations, an extension height of the positive tab part in an extended state in the Y direction is greater than a height of the first composite slot in the Y direction; and
an extension height of the negative tab part in an extended state in the Y direction is greater than a height of the second composite slot in the Y direction.

By reserving a certain extension height for the positive tab or the negative tab, it is convenient to use the positive tab or the negative tab as a soft tab to adapt a hard tab in a subsequent process.

In some implementations, the positive tab part includes a positive tab bending part located in the first composite slot; and the negative tab part includes a negative tab bending part located in the second composite slot.

At least part of each of the positive tab part and/or the negative tab part in the solid-state battery core may be bent inward into the corresponding composite slot, which is beneficial to further increasing the volume occupancy ratio of the electrode part in the solid-state battery core in the case of reserving the positive tab part and the negative tab part of sufficient height, and may greatly increase the volumetric energy density of the solid-state battery core and the solid-state battery.

In some implementations, a width of the positive tab part in the X direction is less than a width of the first composite slot in the X direction; and
a width of the negative tab part in the X direction is less than a width of the second composite slot in the X direction.

In some implementations, in the X direction, there is a gap between the positive tab part and each of two side edges of the first composite slot, and there is a gap between the negative tab part and each of two side edges of the second composite slot.

By reserving a certain gap at the composite slot for the two side edges of the corresponding tab part, appropriate movement spaces can be reserved for the positive and negative tab parts, and the positive and negative tab parts can be bent into the composite slot more conveniently.

In some implementations, the solid-state battery core has a laminated structure.

In some implementations, the positive electrode body includes at least one positive electrode layer, each positive electrode layer is provided with slots corresponding to the first composite slot and the second composite slot, respectively, and a positive tab is provided at the slot, corresponding to the first composite slot, in the at least one positive electrode layer;
the negative electrode body includes at least one negative electrode layer, each negative electrode layer is provided with slots corresponding to the second composite slot and the first composite slot, respectively, and a negative tab is provided at the slot, corresponding to the second composite slot, in the at least one negative electrode layer;
the solid electrolyte part includes at least one solid electrolyte layer, and any adjacent positive electrode layer and negative electrode layer are separated by the solid electrolyte layer; and each solid electrolyte layer is provided with empty slots corresponding to the first composite slot and the second composite slot, respectively.

In some implementations, the positive electrode body includes at least one positive electrode layer, each positive electrode layer independently includes a positive electrode current collector layer and a positive electrode active material layer located on at least one side of the positive electrode current collector layer, the positive electrode layer is provided with a positive tab slot, all the positive tab slots in the positive electrode body jointly form a part of the first composite slot, the positive electrode current collector layer in the at least one positive electrode layer is connected to a positive tab at a corresponding positive tab slot, and all the positive tabs connected to the positive electrode body jointly form at least a part of the positive tab part;
the negative electrode body includes at least one negative electrode layer, each negative electrode layer independently includes a negative electrode current collector layer and a negative electrode active material layer located on at least one side of the negative electrode current collector layer, the negative electrode layer is provided with a negative tab slot, all the negative tab slots in the negative electrode body jointly form a part of the first composite slot, the negative electrode current collector layer in the at least one negative electrode layer is connected to a negative tab at a corresponding negative tab slot, and all the negative tabs connected to the negative electrode body jointly form at least a part of the negative tab part.

When the solid-state battery core adopts the foregoing laminated structure, at the first composite slot, the positive tab slot on the positive electrode layer, the empty slot on the negative electrode layer and the empty slot on the solid electrolyte layer may be combined to form a concave space for the positive tab part to bend inward. At the second composite slot, the negative tab slot on the negative electrode layer, the empty slot on the positive electrode layer, and the empty slot on the solid electrolyte layer may be combined to form a concave space for the negative tab part to bend inward.

In some implementations, there is a plurality of positive electrode layers in the positive electrode body; and the number of the negative electrode layers in the negative electrode body matches the number of the positive electrode layers in the positive electrode body.

When there is a plurality of positive electrode layers in the positive electrode body and the number of the negative electrode layers in the negative electrode body matches the number of the positive electrode layers in the positive electrode body, the laminated structure corresponds to a multi-layer laminated structure, and at this time, the foreordaining structure design of the active expansion region is beneficial to gaining more volumetric energy density at the tab space.

In some implementations, the plurality of positive electrode layers in the positive electrode body are connected to the positive tab; and the plurality of negative electrode layers in the negative electrode body are connected to the negative tab.

When the plurality of positive electrode layers in the positive electrode body are all connected to the positive tabs, and the plurality of negative electrode layers in the negative electrode body are all connected to the negative tabs, it is more beneficial to reducing the waste of space in the case caused by laminating the plurality of tabs.

In a second aspect of the present application, provided is a solid-state battery cell, including the solid-state battery core described in the first aspect of the present application.

In a third aspect of the present application, provided is a solid-state battery, including the solid-state battery core described in the first aspect of the present application.

In some implementations, the solid-state battery is an all-solid-state battery.

In a third aspect of the present application, provided is an electrical apparatus, including at least one of the solid-state battery core described in the first aspect of the present application, the solid-state battery cell described in the second aspect of the present application, and the solid-state battery described in the third aspect of the present application.

The solid-state battery cell and the solid-state battery including the foregoing solid-state battery core increase the volume of the electrode body at the height of the tab, increase the space occupancy of the electrode active material layer, and greatly improve the volumetric energy density.

Details of one or more implementations or embodiments of the present application are set forth in the accompanying drawings and the description below. Other features, objectives, and advantages of the present application will be apparent from the specification, and the accompanying drawings, and the claims.

### BRIEF DESCRIPTION OF THE DRAWINGS

To better describe and illustrate the implementations, embodiments, or examples according to the present application, reference can be made to one or more accompanying drawings. Additional details or examples used to describe the accompanying drawings should not be considered as limiting the scope of any of the disclosed application, the currently described implementations, embodiments, or examples, and best modes of these applications as currently understood. Moreover, the same reference numerals are used to denote the same components throughout the accompanying drawings. It should also be noted that the accompanying drawings are all drawn in a simplified form and are only used to conveniently and clearly assist in describing the present application. The various dimensions of each component shown in the drawings are arbitrarily shown, and may be accurate or not drawn to actual scale. For example, the dimensions of components in the drawings are appropriately exaggerated to make the illustration clearer. Unless otherwise specified, the components in the drawings are not necessarily drawn to scale. The present application does not limit the dimensions of each component.

In the accompanying drawings:
FIG. 1 is a schematic structural diagram of a solid-state battery core according to an embodiment of the present application, where (a) is a front view, and (A-A), (B-B) and (C-C) are cross-sectional views at positions A-A, B-B and C-C, respectively; and the dashed line is the reference line.

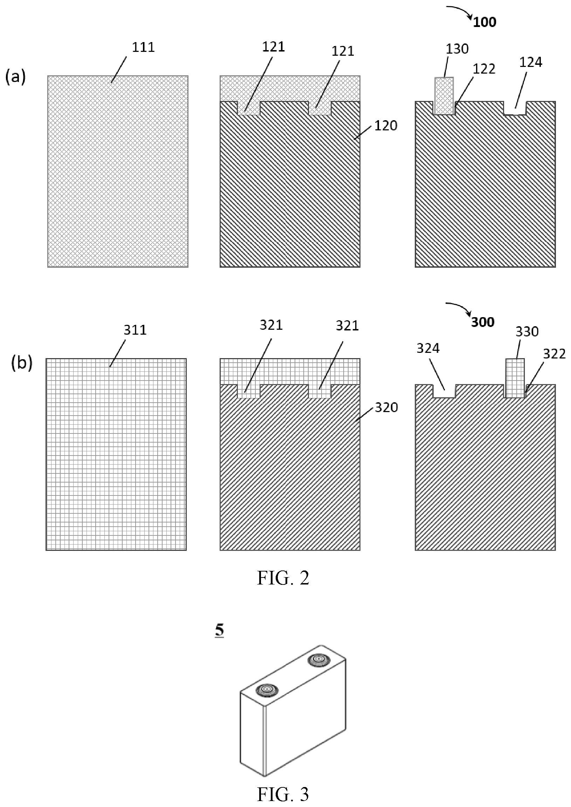

FIG. 2 is a schematic diagram of a preparation process of a positive electrode sheet and a negative electrode sheet according to an implementation of the present application, where (a) the three structures involved in the preparation process of the positive electrode sheet from left to right are sequentially a positive electrode current collector film, a positive electrode multilayer body formed by laminating a positive electrode active region having a positive electrode concave blank region on the surface of the positive electrode current collector film, and a positive electrode sheet including a positive tab formed by die-cutting; and (b) the three structures involved in the preparation process of the negative electrode sheet from left to right are sequentially a negative electrode current collector film, a negative electrode multilayer body formed by laminating a negative electrode active region having a negative electrode concave blank region on the surface of the negative electrode current collector film, and a negative electrode sheet including a negative tab formed by die-cutting.
FIG. 3 is a schematic diagram of a solid-state battery cell according to an implementation of the present application.
FIG. 4 is an exploded view of the solid-state battery cell shown in FIG. 3 according to an implementation of the present application.
FIG. 5 is a schematic diagram of a battery module according to an implementation of the present application.
FIG. 6 is a schematic diagram of a battery pack according to an implementation of the present application.
FIG. 7 is an exploded view of the battery pack shown in FIG. 6 according to an implementation of the present application.
FIG. 8 is a schematic diagram of an electrical apparatus using a solid-state battery as a power supply according to an implementation of the present application.

### Description of reference signs:

10, positive electrode layer; 20, solid electrolyte layer; 30, negative electrode layer; 1300, positive tab part; 1302, first composite slot; 3300, negative tab part; 3302, second composite slot; X is the X direction; Y is the Y direction; Z is the Z direction; 100, positive electrode sheet; 111, positive electrode current collector film; 120, positive electrode active region; 121, positive electrode concave blank region; 130, positive tab; 122, positive tab slot; 124, first empty slot; 300, negative electrode sheet; 311, negative electrode collector film; 320, negative electrode active region; 321, negative electrode concave blank region; 330, negative tab; 322, negative tab slot; 324, second empty slot; 1, battery pack; 2, upper case; 3, lower case; 4, battery module; 5, solid-state battery cell; 51, housing; 52, solid-state battery core; 53, cover plate; and 6, electrical apparatus.

### DETAILED DESCRIPTION OF PREFERRED EMBODIMENTS

Some implementations of the solid-state battery core, the solid-state battery cell, the solid-state battery and the electrical apparatus of the present application will be appropriately described in detail below with reference to drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if the ranges of 60-120 and 80-110 are listed for a specific parameter, it is understood that the ranges of 60-110 and 80-120 are also expected. Furthermore, if the smallest range values 1 and 2 are listed, and if the largest range values 3, 4 and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

Unless otherwise defined, "a plurality of", "multiple", "a plurality of items", "several", and the like involved in the present application mean the quantity of two or more. For example, "one or more" means one or greater or equal to two. It can be understood that "any of a plurality of" items refers to any suitable combination of a plurality of items, that is, the combination of "any of a plurality of " items is performed in a manner that does not conflict and can implement the present application.

Unless otherwise specified, all implementations and optional implementations of the present application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments. The "implementation" mentioned herein has a similar understanding.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, a includes a1, a2, and a3, and may further include another member or may not include an additional member unless otherwise specified, and it may be considered that both a feature or solution in which "a is composed of a1, a2, and a3" or "a is selected from a1, a2, and a3" and a feature or solution in which "a includes not only a1, a2, and a3 but also another member" are provided.

In the present application, unless otherwise specified, M (e.g., M1) means that m1 is a non-limiting example of M, and it may be understood that M is not limited to m1.

In the present application, "optionally", "optional", and "option" mean that there is or not, that is, mean any one of two parallel solutions: "with" or "without". If "option" occurs repeatedly in a technical solution, each "option" is independent, unless otherwise specified without inconsistency or mutual restriction. Unless otherwise specified, in the present application, descriptions such as "optionally include" and "optionally contain" are used, and "optionally include" is used as an example to indicate "may include or not include ".

In the present application, unless otherwise specified, a feature or solution corresponding to "and/or" includes any one of two or more related listed items, and also includes any and all combinations of the related listed items, and the any and all combinations include any two related listed items, any more related listed items, or all related listed items. For example, "M and/or N" indicates a group consisting of M, N, and "a combination of M and N". Herein, "including M and/or N" may mean "including M, including N, and including M and N", and may also mean "including M, including N, or including M and N", which can be properly understood according to the sentence in which it is used.

As used herein, "a combination thereof", "any combination thereof", "any combination mode thereof," and the like includes all suitable combination modes of any two or more of listed items.

Herein, "suitable" in "suitable combination mode", "suitable mode", "any suitable mode", and the like allows that the technical solution of the present application can be implemented.

Herein, the terms "preferred", "better", "optimal", "appropriate", "good", and "comparatively good" are merely used to describe preferred implementations or embodiments, and should not be construed to limit the scope of the present application. If "preferred" occurs repeatedly in a technical solution, each "preferred" is independent, unless otherwise specified without inconsistency or mutual restriction.

In the present application, the terms "further", "even further", "particularly", "for example", "such as", "example", and "illustrative", and the like are used for descriptive purposes to indicate differences in content, but should not be construed to limit the scope of the present application.

In the present application, in the "first aspect", "second aspect", "third aspect", "fourth aspect", and the like, the terms "first", "second", "third", "fourth" and the like are used for descriptive purposes only, and should not be construed as indicating or implying relative importance or number, nor as implicitly indicating the importance or quantity of technical features indicated. Also, "first", "second", "third", "fourth" and the like are used merely for the purpose of describing a non-exhaustive list, and it should be understood that they do not constitute a closed limitation on the quantity.

In the description of the present application, it should be understood that the orientation or positional relationship indicated by the terms such as "length", "width", "upper", "lower", "front", "rear", "left", "right", "vertical", "horizontal", "top", "bottom", "inner" and "outer" is based on the orientation or positional relationship shown in the drawings, only to facilitate the description of the present application and simplify the description, rather than to indicate or imply that the referred device or element must have a specific orientation, be constructed and operated in a specific orientation, and therefore cannot be understood as a limitation to the present application.

In the present application, unless otherwise specified and defined explicitly, the terms "mount", "connect", "join", and "fasten" should be understood in their general senses. For example, the connection may be a fixed connection, a detachable connection, or an integral connection. Those skilled in the art can understand specific meanings of these terms in the present application according to specific situations.

In the description of the implementations of the present application, unless otherwise specified and limited, a first feature being "above" or "below" a second feature may be that the first feature is in direct contact with the second feature, or the first feature is in indirect contact with the second feature through an intermediate medium. In the present application, unless otherwise specified and defined, the first feature "above" or "below" the second feature may indicate a mutual positional relationship in a horizontal plane, or may only indicate that there is an attachment relationship without limiting the mutual positional relationship in the horizontal plane.

In the present application, the term "room temperature" generally refers to 4°C to 35°C, and may refer to 20°C±5°C. In some implementations or embodiments of the present application, room temperature refers to 20°C to 30°C.

In the present application, when the unit of a data range is related, the unit of a left end point and the unit of a right end point are the same if the unit is attached only after the right end point. For example, 3~5 mm or 3-5 mm each means that the unit of the left end point "3" and the unit of the right end point "5" are both m (millimeter), which has the same meaning as 3mm to 5mm. In addition, the similar description of other parameters such as temperature and dimension is also understood in a same manner.

In the present application, "greater than and equal to", "greater than or equal to", and "≥" have the same meaning and can be used interchangeably; "less than and equal to", "less than or equal to", and "≤" have the same meaning and can be used interchangeably; and "greater than" can be equivalently expressed as ">", and "less than" can be equivalently expressed as "<". In the present application, unless otherwise specified, "greater than or equal to" and "≥" may be considered as further providing two solutions of "greater than" and "equal to". In the present application, unless otherwise specified, "less than or equal to" and "≤" may be considered as further providing two solutions of "less than" and "equal to".

In the present application, exemplary descriptions related to "in some implementations (or embodiments)", "in one implementation (or embodiment)", and the like may cover but are not limited to the following meanings: these solutions may be combined with other solutions in a suitable manner to form a new technical solution.

The improvement effects described in the present application, unless otherwise specified, are not intended to be limited to any theory.

In a conventional solid-state battery, a soft tab obtained by die-cutting is located outside an electrode active material layer, and after a cell is assembled, the soft tab is suspended outside an electrode sheet active region, and in order to be able to connect a plurality of soft tabs together after being placed in a housing and then connect a rigid tab, a certain space in the case needs to be reserved for the soft tab. After the electrode assembly is encapsulated in the case, since the soft tab occupies a certain height space, there is always a certain gap between the top of the electrode sheet and the bottom of the housing, and the region outside the tab corresponding to this gap is usually vacant, thereby causing the loss of the fixation of the space in the housing. In addition, the side surface of the soft tab is easily cracked due to the force, which increases the impedance of the cell and affects the performance of the cell.

In the present application, the "soft tab" may be obtained by die-cutting the current collector in the electrode sheet, and meanwhile, the current collector layer matching the position of the electrode active material layer is obtained, that is, the soft tab and the current collector layer in the electrode sheet may be integrated. However, the present invention is not limited thereto. Without limitation, the material of the soft tab may be the same as the material of the corresponding current collector layer. In some non-limiting implementations, the soft tab and the current collector layer may be from the same film, at least a part of the film forms the current collector layer, and at least another part of the film forms the soft tab, and at this time, the soft tab and the current collector layer in the electrode sheet may be integrated.

In the present application, unless otherwise specified, the "rigid tab" refers to a tab segment located outside the battery housing and used for leading out the metal conductors of the positive and negative electrodes from the battery cell. Without limitation, the rigid tab of the positive electrode may use aluminum as the metal part, and the rigid tab of the negative electrode may use nickel as the metal part.

Based on this, the present application provides a solid-state battery core, a solid-state battery cell, a solid-state battery, and an electrical apparatus. The solid-state battery core may be used to increase the energy density of the battery.

In some implementations, the solid-state battery core includes a positive electrode part, a solid electrolyte part, and a negative electrode part which are stacked, and the positive electrode part and the negative electrode part are separated by the solid electrolyte part; the positive electrode part includes a positive electrode body and a positive tab part connected to the positive electrode body, and the negative electrode part includes a negative electrode body and a negative tab part connected to the negative electrode body; and at least one side edge extending in the width direction of the solid-state battery core, the solid-state battery core is provided with a first composite slot and a second composite slot, the first composite slot being used for accommodating at least part of the positive tab part, and the second composite slot being used for accommodating at least part of the negative tab part.

In this case, in the width direction of the solid-state battery core, the solid-state battery core is provided with an active expansion region in a space region other than the positive tab part and the negative tab part. The solid-state battery core may be used to increase the volumetric energy density of the battery.

In the present application, unless otherwise specified, the "solid-state battery" provided in the present application refers to a battery in which the electrolyte includes a solid electrolyte; and generally, a solid-state battery includes a positive electrode part, a solid electrolyte part, and a negative electrode part. In a charging and discharging process of the battery, active ions are intercalated and deintercalated back and forth between a positive electrode part and a negative electrode part. The solid electrolyte part plays a role of conducting ions between the positive electrode part and the negative electrode part, and may also play a role of separating the positive electrode part from the negative electrode part to prevent short circuit between the positive electrode and the negative electrode, so that the solid-state battery may not be provided with a separator in a conventional lithium-ion battery. The solid-state battery uses a non-flammable solid electrolyte to replace the organic electrolyte in the conventional liquid lithium-ion battery, so that the safety of the battery is greatly improved. In addition to improving the safety, the solid-state battery can also be better adapted to positive and negative electrode materials with high energy density, and reduce the weight of the system, which is beneficial to improving the energy density.

In the present application, unless otherwise specified, the "solid electrolyte part" refers to a structural part including a solid electrolyte. The solid electrolyte part includes at least one solid electrolyte layer, and the number of solid electrolyte layers matches the number of electrode layers in the electrode part.

In the present application, unless otherwise specified, the "solid electrolyte" refers to an electrolyte material or an electrolyte substance that exists in a solid form during the storage and preparation of the solid-state battery and the components constituting the solid-state battery and during the operation of the solid-state battery. It may be understood that the solid electrolyte exists in a solid state at room temperature, but is not limited thereto.

In the present application, unless otherwise specified, the "electrode part" includes a positive electrode part and a negative electrode part. The positive electrode part includes a positive electrode body and a positive tab part connected to the positive electrode body, and the negative electrode part includes a negative electrode body and a negative tab part connected to the negative electrode body.

In the present application, unless otherwise specified, the "electrode part" includes an electrode body and a tab part connected to the electrode body. The "electrode body" may be a positive electrode body or a negative electrode body. The electrode body in the positive electrode partis a positive electrode body, and the electrode body in the negative electrode partis a negative electrode body.

In the present application, unless otherwise specified, the "electrode body" includes at least one electrode layer, and the electrode body may include one or more electrode layers. The number of layers of the electrode body is consistent with the number of electrode layers in the electrode body. The "electrode body" may be a positive electrode body or a negative electrode body. The positive electrode body includes at least one positive electrode layer, the positive electrode body may include one or more positive electrode layers, and the number of the positive electrode layers in the positive electrode body is consistent with the number of the positive electrode layers in the positive electrode body. The negative electrode body includes at least one negative electrode layer, the negative electrode body may include one or more negative electrode layers, and the number of the negative electrode layers in the negative electrode body is consistent with the number of the positive electrode layers in the positive electrode body.

In the present application, unless otherwise specified, a solid electrolyte layer is disposed between any adjacent positive electrode layer and negative electrode layer. Therefore, the number of the solid electrolyte layers in the solid electrolyte part matches the number of the electrode layers in the electrode part.

Generally, a solid-state battery includes a positive electrode layer, a solid electrolyte layer, and a negative electrode layer. In a charging and discharging process of the battery, active ions are intercalated and deintercalated back and forth between a positive electrode layer and a negative electrode layer. The solid electrolyte layer plays a role of conducting ions between the positive electrode layer and the negative electrode layer, and may further play a role of isolating the positive electrode and the negative electrode, to prevent the positive electrode and the negative electrode from being short-circuited.

In some implementations, each electrode layer independently includes a current collector layer and an electrode active material layer located on at least one side of the current collector layer. In some implementations, each positive electrode layer independently includes a positive electrode current collector layer and a positive electrode active material layer located on at least one side of the positive electrode current collector layer, and each negative electrode layer independently includes a negative electrode current collector layer and a negative electrode active material layer located on at least one side of the negative electrode current collector layer.

In the present application, unless otherwise specified, the "electrode active material layer" includes at least one of the positive electrode active material layer in the positive electrode layer and the negative electrode active material layer in the negative electrode layer, and the electrode active material layer may refer to the positive electrode active material layer or the negative electrode active material layer according to the detailed circumstances. It can be understood that the positive electrode active material layer contains a positive electrode active material, and the negative electrode active material layer contains a negative electrode active material.

In the present application, unless otherwise specified, the "tab part" may be a positive tab part or a negative tab part. The tab part in the positive electrode part is a positive tab part, and the positive tab part is connected to the positive electrode body. The tab part in the negative electrode part is a negative tab part, and the negative tab part is connected to the negative electrode body.

In the present application, unless otherwise specified, the "tab part" independently includes at least one tab, and any "tab" is independently connected to the current collector layer of the corresponding electrode layer. The positive tab part includes at least one positive tab, and the positive tab is connected to the positive electrode current collector layer of the corresponding positive electrode layer. The negative tab part includes at least one negative tab, and the negative tab is connected to the negative electrode current collector layer of the corresponding negative electrode layer. Each electrode layer may be provided with a tab or not, but at least one positive electrode body is connected to a positive tab, and at least one negative electrode body is connected to a negative tab.

It may be understood that the connection between the tab part and the corresponding electrode body is at least a physical connection, and an electrical connection may also be achieved during the cycling of the battery.

In the present application, unless otherwise specified, the "electrode layer" includes an electrode active material. The electrode layer may be a positive electrode layer or a negative electrode layer. The "negative electrode active substance" in the electrode layer refers to a substance capable of reversibly intercalating and deintercalating active ions. Unless otherwise specified, the "negative electrode active substance" refers to a substance used in the negative electrode layer and capable of reversibly intercalating and deintercalating active ions; and the "positive electrode active substance" refers to a substance used in the positive electrode layer and capable of reversibly deintercalating and intercalating active ions. When the solid-state battery is charged, the active ions are deintercalated from the positive electrode and intercalated into the negative electrode through the solid electrolyte layer; and when the solid-state battery is discharged, the active ions are deintercalated from the negative electrode and intercalated into the positive electrode. The active ions are not particularly limited Without limitation, the active ions may be lithium ions, which correspond to a lithium-ion solid-state battery in this case.

In a first aspect, the present application provides a solid-state battery core provided with an active expansion region. The solid-state battery core may be used to increase the energy density of the battery.

In the present application, unless otherwise specified, the height direction of the solid-state battery core is denoted as the Y direction, the width direction is denoted as the X direction, and the thickness direction is denoted as the Z direction; and the X direction, the Y direction, and the Z direction are perpendicular to each other.

In some implementations, the present application provides a solid-state battery core, including a positive electrode part, a solid electrolyte part and a negative electrode part which are stacked, where the positive electrode part and the negative electrode part are separated by the solid electrolyte part; the positive electrode part includes a positive electrode body and a positive tab part connected to the positive electrode body, and the negative electrode part includes a negative electrode body and a negative tab part connected to the negative electrode body; and

at least one edge extending in the X direction, the solid-state battery core is provided with two composite slots, which are respectively denoted as a first composite slot and a second composite slot; and the first composite slot is configured to accommodate at least a part of the positive tab part, and the second composite slot is configured to accommodate at least a part of the negative tab part.

In the present application, unless otherwise specified, in the solid-state battery core, the active region that is consistent with the first composite slot and the second composite slot in height in the Y direction and is located outside the first composite slot and the second composite slot in the X direction is denoted as an "active expansion region".

In the present application, unless otherwise specified, the "active region" refers to a region in which the electrode active material layer is disposed in the solid-state battery core in terms of projection in the Z direction. Unless otherwise specified, the positive electrode body and the negative electrode body both correspond to the active region, the positive electrode body corresponds to the positive electrode active region, and the negative electrode body corresponds to the negative electrode body region. Unless otherwise specified, the active region of the solid-state battery core corresponds to the region other than the positive tab part and the negative tab part in terms of projection in the Z direction.

In the present application, unless otherwise specified, in the X direction, due to the presence of the first composite slot and the second composite slot, the active region of the solid-state battery core has a concave shape at the corresponding edge.

In the present disclosure, unless otherwise specified, "stacked" is used to describe the positional relationship of a plurality of layered structures, which means that the plurality of layered structures are stacked in respective thickness directions thereof. Those skilled in the art may understand the meaning thereof. For example, "including a structural layer A and a structural layer B which are stacked" means that the stacking direction of the structural layer A and the structural layer B is in the respective layer thickness direction, that is, the thickness direction of the structural layer A is consistent or substantially consistent with the thickness direction of the structural layer B. It may be understood that other intermediate structural layers may be disposed between the structural layer A and the structural layer B.

In the present disclosure, unless otherwise specified, the "composite slot" may be the first composite slot or the second composite slot, or may be a combination of the first composite slot and the second composite slot. This may be properly understood in conjunction with the manner of description. For example, "two composite slots" refers to a combination of a first composite slot and a second composite slot.

In the present application, unless otherwise specified, the "first composite slot" refers to a slot for accommodating at least a part of the positive tab part in the solid-state battery core. At least a part of the positive tab part is located within the concave region provided by the first composite slot. Unless otherwise stated, the positive tab part is connected to the positive electrode body at the bottom of the first composite slot. The "bottom of the first composite slot" refers to a side of the first composite slot farthest from the opening in the Y direction, and is also a top of a side of the positive electrode body closest to the first composite slot in the Y direction. Unless otherwise stated, the positive tab part is not connected to the two side edges of the first composite slot, so that the positive tab part is movable in the direction perpendicular to the X direction.

In the present application, unless otherwise specified, the "second composite slot" refers to a slot for accommodating at least a part of the negative tab part in the solid-state battery core. At least a part of the negative tab part is located within the concave region provided by the second composite slot. Unless otherwise stated, the negative tab part is connected to the negative electrode body at the bottom of the second composite slot. The "bottom of the second composite slot" refers to a side of the second composite slot farthest from the opening in the Y direction, and is also a top of a side of the negative electrode body closest to the second composite slot in the Y direction. Unless otherwise stated, the negative tab part is not connected to the two side edges of the second composite slot, so that the negative tab part is movable in the direction perpendicular to the X direction.

In the present application, in the "first composite slot" and "second composite slot", the terms "first" and "second" are used for descriptive purposes only, and should not be construed as indicating or implying relative importance or number, nor as implicitly indicating the importance or quantity of technical features indicated. Also, "first" and "second" are used merely for the purpose of describing a non-exhaustive list, and it should be understood that they do not constitute a closed limitation on the quantity.

In the present application, unless otherwise specified, the "active expansion region" is a part of the solid-state battery core, the active expansion region is an active region provided with an electrode active material layer, the active expansion region has a same height as the first composite slot and the second composite slot in the height direction (Y direction) of the solid-state battery core, the active expansion region is divided into discontinuous regions by the first composite slot and the second composite slot in the width direction (X direction) of the solid-state battery core, and two side contours of the first composite slot and the second composite slot extending in the Y direction are provided by adjacent active expansion regions. The "active expansion region" may also be described as a height region of the solid-state battery core in the Y direction provided with two composite slots.

The solid-state battery core is provided with the first composite slot at the positive tab part for bending the positive tab inward, and a second composite slot at the negative tab part for bending the negative tab inward, and at this time, the active expansion region is disposed in a region that is consistent with the first composite slot and the second composite slot in height and is located outside the first composite slot and the second composite slot in the width direction of the solid-state battery core; that is, in the width direction of the solid-state battery core, the solid-state battery core is provided with an active expansion region with the same height as the first composite slot and the second composite slot in the space region other than the positive tab part and the negative tab part, so that the solid-state battery core can better utilize the space at the tab, thereby greatly increasing the space volume occupied by the electrode part in the solid-state battery core, and significantly improving the volumetric energy density of the solid-state battery core and the solid-state battery. The two composite slots can also provide protection for the tab part and reduce the risk of tab breakage.

In some implementations, the height of the positive electrode body at the active expansion region is higher than the height of the positive electrode body at the first composite slot, and the height of the negative electrode body at the active expansion region is higher than the height of the negative electrode body at the second composite slot. In this case, the solid-state battery core can better utilize the space at the tab, thereby greatly increasing the space volume occupied by the electrode part in the solid-state battery core, and significantly improving the volumetric energy density of the solid-state battery core and the solid-state battery.

In some implementations, the present application provides a solid-state battery core, including a positive electrode part, a solid electrolyte part and a negative electrode part which are stacked, where the positive electrode part and the negative electrode part are separated by the solid electrolyte part; the positive electrode part includes a positive electrode body and a positive tab part connected to the positive electrode body, and the negative electrode part includes a negative electrode body and a negative tab part connected to the negative electrode body; and
at least one edge extending in the X direction, the solid-state battery core is provided with two composite slots, which are respectively denoted as a first composite slot and a second composite slot; the first composite slot is configured to accommodate at least a part of the positive tab part, and the second composite slot is configured to accommodate at least a part of the negative tab part; and
a height region of the solid-state battery core provided with the two composite slots in the Y direction is recorded as an active expansion region, and a maximum height of the active expansion region in the Y direction is denoted as H_{Δ}, satisfying H_{Δ}>0.

In the present application, unless otherwise specified, the height of the positive electrode body in the Y direction is denoted as H_{P}, the height of the negative electrode body in the Y direction is denoted as H_{N}, and the height of the solid-state battery core in the Y direction is denoted as H₀.

In some implementations, H_{P}>(H₀-H_{Δ}).

In some implementations, H_{N}>(H₀-H_{Δ}).

In some implementations, H_{P}>(H₀-H_{Δ}) and H_{N}>(H₀-H_{Δ}).

In some implementations, the present application provides a solid-state battery core, including a positive electrode part, a solid electrolyte part and a negative electrode part which are stacked, where the positive electrode part and the negative electrode part are separated by the solid electrolyte part; the positive electrode part includes a positive electrode body and a positive tab part connected to the positive electrode body, and the negative electrode part includes a negative electrode body and a negative tab part connected to the negative electrode body; and
a height direction of the solid-state battery core is denoted as a Y direction, a width direction of the solid-state battery core is denoted as an X direction, and a thickness direction of the solid-state battery core is denoted as a Z direction; the X direction, the Y direction and the Z direction are perpendicular to each other;
at least one edge extending in the X direction, the solid-state battery core is provided with two composite slots, which are respectively denoted as a first composite slot and a second composite slot; the first composite slot is configured to accommodate at least a part of the positive tab part, and the second composite slot is configured to accommodate at least a part of the negative tab part; and
a height of the positive electrode body in the Y direction is denoted as H_{P}, a height of the negative electrode body in the Y direction is denoted as H_{N}, and a height of the solid-state battery core in the Y direction is denoted as H₀; and a height region of the solid-state battery core provided with the two composite slots in the Y direction is recorded as an active expansion region, and a maximum height of the active expansion region in the Y direction is denoted as H_{Δ}, satisfying H_{Δ}>0; and
in some implementations, H_{P}>(H₀-H_{Δ}) and H_{N}>(H₀-H_{Δ}).

In the present application, unless otherwise specified, the "height of the positive electrode body in the Y direction" refers to the maximum height of the positive electrode body in the Y direction. In some implementations, the height of the positive electrode body in the Y direction is equal to a sum of the height of the positive electrode body at the first composite slot and the height of the first composite slot.

In the present application, unless otherwise specified, the "height of the negative electrode body in the Y direction" refers to the maximum height of the negative electrode body in the Y direction. In some implementations, the height of the negative electrode body in the Y direction is equal to a sum of the height of the negative electrode body at the second composite slot and the height of the second composite slot.

In the present application, unless otherwise specified, the "height of the solid-state battery core in the Y direction" refers to the maximum height of the electrode body in the Y direction. Unless otherwise specified, the "height of the solid-state battery core in the Y direction" does not include the height of the tab part.

In the present disclosure, unless otherwise specified, the "maximum height of the active expansion region in the Y direction" is consistent with the maximum depth of the first composite slot and the second composite slot in the Y direction.

The solid-state battery core has a certain extension length in the X direction and a certain extension height in the Y direction. The two top edges of the solid-state battery core having a certain distance in the Y direction may be recorded as "two side edges of the solid-state battery cell extending in the X direction" or "two side edges of the solid-state battery in the Y direction".

In the present application, unless otherwise specified, "at least one side edge extending in the X direction, the solid-state battery core is provided with two composite slots" and "at least one side edge in the Y direction, the solid-state battery core is provided with two composite slots" have the same meaning and may be used interchangeably.

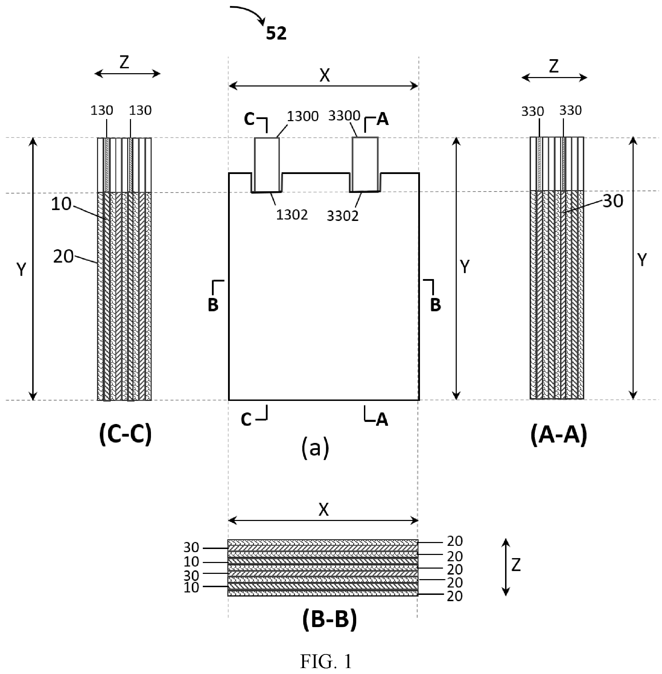

In the present application, "at least one side edge extending in the X direction, the solid-state battery core is provided with two composite slots" means that the solid-state battery core is provided with two composite slots, and the two composite slots are located at the same side edge of the solid-state battery core extending in the X direction, or are respectively located at different side edges of the solid-state battery core extending in the X direction. That is, the two composite slots may be located on the same side of the solid-state battery core in the Y direction, or may be located on different sides of the solid-state battery core in the Y direction. In the non-limiting implementation shown in FIG. 1, the first composite slot and the second composite slot are located at the same side edge of the solid-state battery core extending in the X direction.

When the two composite slots are located on different sides of the solid-state battery core in the Y direction, correspondingly, the positive tab part and the negative tab part are located on different sides of the solid-state battery core, and in this case, the effect of improving the volumetric energy density is more significant by providing the active expansion region in the solid-state battery core.

In some implementations, the first composite slot and the second composite slot are located at the same side edge of the solid-state battery core extending in the X direction. That is, in the Y direction, the first composite slot and the second composite slot are located on the same side of the solid-state battery core.

In some implementations, the first composite slot and the second composite slot are located at different side edges of the solid-state battery core extending in the X direction. That is, in the Y direction, the first composite slot and the second composite slot are located on different sides of the solid-state battery core.

In some implementations, H_{N} is equal to H₀. In this case, the electrode active material layer may be disposed by utilizing the space at the tab as much as possible, thereby improving the volumetric energy density of the solid-state battery core and the solid-state battery as much as possible.

The utilization ratio of the active expansion region in the Y direction may be expressed as ψ_{Y}= H_{Δ}/H₀×100%.

In some implementations, the solid-state battery core satisfies one or more of the following features:
H_{Δ}≥0.05mm, optionally, 0.05mm≤H_{Δ}≤1mm;
ψ_{Y}≥0.05%, optionally, ψ_{Y}≥0.1%, further optionally, 0.1%≤ψ_{Y}≤2%.

Without limitation, H_{Δ}≥0.05mm, optionally, 0.05mm≤H_{Δ}≤1mm. Without limitation, R_{N} may also be any one of the following values or selected from an interval formed by any two of the following values: 0.05 mm, 0.06 mm, 0.08 mm, 0.1 mm, 0.15 mm, 0.2 mm, 0.25 mm, 0.4 mm, 0.5 mm, 0.6 mm, 0.8 mm, 0.9 mm, 1.0 mm, 1 mm, and the like.

Without limitation, ψ_{Y}≥0.05%, optionally, ψ_{Y}≥0.1%, further optionally, 0.1%≤ψ_{Y}≤2%. Without limitation, ψ_{Y} may be any one of the following percentages or selected from an interval selected from any two of the following percentages: 0.05%, 0.06%, 0.08%, 0.1%, 0.2%, 0.4%, 0.5%, 0.6%, 0.8%, 1%, 1.2%, 1.4%, 1.5%, 1.6%, 1.8%, 2%, and the like. Without limitation, ψ_{Y} may also be any one of the following ranges: 0.05%≤ψ_{Y}≤2%, and the like.

By controlling one or two of the height parameter h_{Δ} and the utilization ratio parameter ψ_{Y} of the active expansion region within the foregoing ranges, it is beneficial to better utilizing the space in the height direction at the position of the tab.

The width of the solid-state battery core in the X direction may be denoted as W₀, the width of the active expansion region in the X direction may be denoted as W_{Δ}, and the utilization ratio of the active expansion region in the X direction is ψ_{X}= W_{Δ}/W₀×100%.

In some implementations, the solid-state battery core satisfies one or more of the following features:
W_{Δ}≥50mm, optionally, 50mm≤W_{Δ}≤1000mm;
ψ_{X}≥60%, optionally ψ_{X}≥70%, further optionally 70%≤ψ_{X}≤95%.

Without limitation, W_{Δ}≥50mm, optionally, 50mm≤W_{Δ}≤1000mm. Without limitation, W_{Δ} may also be any one of the following values or selected from an interval formed by any two of the following values: 50 mm, 60 mm, 80 mm, 100 mm, 120 mm, 150 mm, 200 mm, 250 mm, 300 mm, 400 mm, 500 mm, 600 mm, 700 mm, 800 mm, 900 mm, 1000 mm, and the like.

Without limitation, ψ_{X}≥60%, optionally, 60%≤ψ_{X}≤95%. Without limitation, ψ_{X} may be any one of the following percentages or selected from an interval selected from any two of the following percentages: 60%, 65%, 70%, 75%, 80%, 85%, 90%, 95%, and the like. For example, ψ_{X} may be selected from the following ranges: ψ_{X}≥70%, 70%≤ψ_{X}≤95%, and the like.

By controlling one or two of the width parameter w_{Δ} and the utilization ratio parameter ψ_{X} of the active expansion region within the foregoing ranges, it is beneficial to better utilizing the space in the width direction at the tab position.

In the present application, the projection area of the solid-state battery core in the Z direction is denoted as A₀, the projection area of the active expansion region in the Z direction is denoted as A_{Δ}, and the two dimensional utilization ratio of the active expansion region is ψ_{A}=A_{Δ}/A₀×100%.

In the present application, unless otherwise specified, the "projection area of the solid-state battery core in the Z direction" refers to the projection area of the electrode body part in the Z direction, and does not include the projection area of the tab part in the Z direction.

In some implementations, the solid-state battery core satisfies: ψ_{A}≥0.04%.

In some implementations, the solid-state battery core satisfies: ψ_{A}≥0.05%.

In some implementations, the solid-state battery core satisfies: 0.04%≤ψ_{A}≤1.5%.

Without limitation, ψ_{A} may be any one of the following percentages or selected from an interval selected from any two of the following percentages: 0.04%, 0.05%, 0.06%, 0.07%, 0.08%, 0.09%, 0.1%, 0.15%, 0.16%, 0.2%, 0.3%, 0.4%, 0.5%, 0.6%, 0.7%, 0.8%, 0.9%, 1%, 1.2%, 1.4%, 1.5%, and the like. For example, ψ_{A} may be selected from the following ranges: 0.05%-1.5%, 0.06%-1.5%, 0.1%-1.5%, 0.15%-1.5%, 0.04%-1.2%, 0.05%-1.2%, 0.06%-1.2%, 0.1%-1.2%, 0.15%-1.2%, 0.16%-1.5%, 0.16%-1.2%, and the like.

By controlling the two dimensional utilization ratio ψ_{A} of the active expansion region within the foregoing range, it is beneficial to better comprehensively utilizing the idle space at the tab. It may be understood that, relative to the solid-state battery core without the active expansion region, the percentage increase of the volumetric energy density of the solid-state battery core with the active expansion region may be generally higher than ψ_{A}.

In some implementations, a length of the positive tab part in the Y direction in the extended state is greater than a height of the first composite slot in the Y direction. In some implementations, the positive tab part includes a positive tab bending part located in the first composite slot.

In some implementations, a length of the negative tab part in the Y direction in the extended state is greater than a height of the second composite slot in the Y direction. In some implementations, the negative tab part includes a negative tab bending part located in the second composite slot.

In some implementations, a length of the positive tab part in the extended state in the Y direction is greater than a height of the first composite slot in the Y direction, and a length of the negative tab part in the extended state in the Y direction is greater than a height of the second composite slot in the Y direction.

In some implementations, the positive tab part includes a positive tab bending part located in the first composite slot; and the negative tab part includes a negative tab bending part located in the second composite slot.

In some implementations, the positive tab part includes a positive tab bending part located in the first composite slot, and a length of the positive tab part in the Y direction in the extended state is greater than a height of the first composite slot in the Y direction; and

the negative tab part includes a negative tab bending part located in the second composite slot, and a length of the negative tab part in the Y direction in the extended state is greater than a height of the second composite slot in the Y direction.

By reserving a certain extension height for the positive tab or the negative tab, it is convenient to use the positive tab or the negative tab as a soft tab to adapt a hard tab in a subsequent process. At least part of each of the positive tab part and/or the negative tab part in the solid-state battery core may be bent inward into the corresponding composite slot, which is beneficial to further increasing the volume occupancy ratio of the electrode part in the solid-state battery core in the case of reserving the positive tab part and the negative tab part of sufficient height, and may greatly increase the volumetric energy density of the solid-state battery core and the solid-state battery.

In the present application, the extension height of the positive tab part in the Y direction is denoted as H_{PJ}. When the positive tab part and the negative tab part are located on the same side of the solid-state battery core in the height direction, in some implementations, H_{PJ}≥H_{Δ}, and optionally, H_{PJ}>H_{Δ}.

In the present application, the extension height of the negative tab part in the Y direction is denoted as H_{NJ}. When the positive tab part and the negative tab part are located on the same side of the solid-state battery core in the height direction, in some implementations, H_{NJ}≥H_{Δ}, and optionally, H_{NJ}>H_{Δ}.

In the process of preparing the positive electrode sheet or the negative electrode sheet, when the electrode slurry is coated on the corresponding current collector film, the coating height in the Y direction is controlled to be less than the height of the current collector film, and after drying and die-cutting, the extension height of the formed tab can be greater than the height of the corresponding slot. It may be understood that the positive electrode sheet is prepared by using the positive electrode slurry and the positive electrode current collector film, and the positive tab is formed at the positive tab slot; and a negative electrode sheet is prepared by using the negative electrode slurry and a negative electrode current collector film, and a negative tab is formed at the negative tab slot.

In the present application, unless otherwise specified, the "extension height of the tab" refers to the height of the tab in the Y direction in the extended state.

In some implementations, a width of the positive tab part in the X direction is less than a width of the first composite slot in the X direction.

In some implementations, a width of the negative tab part in the X direction is less than a width of the second composite slot in the X direction.

In some implementations, a width of the positive tab part in the X direction is less than a width of the first composite slot in the X direction; and a width of the negative tab part in the X direction is less than a width of the second composite slot in the X direction.

By reserving a certain gap at the composite slot for the edges of the two sides of the corresponding tab part, a suitable movement space may be reserved for the tab part, and the positive and negative tab parts may be bent into the composite slot more conveniently.

In some implementations, in the X direction, there is a gap between the positive tab part and the two side edges of the first composite slot, and there is a gap between the negative tab part and the two side edges of the second composite slot. Without limitation, the width of any gap in the X direction may be independently 10 µm to 5000 µm, and may be independently 0.1 mm to 1 mm, but is not limited thereto, and the width of any gap in the X direction may be independently any one of the following values or an interval formed by any two of the following values: 10 µm, 50 µm, 100 µm, 0.1 mm, 0.15 mm, 0.2 mm, 0.25 mm, 0.3 mm, 0.35 mm, 0.4 mm, 0.5 mm, 0.6 mm, 0.7 mm, 0.8 mm, 0.9 mm, 1 mm, 1.5 mm, 2 mm, 3 mm, 4 mm, and the like. For example, it may be selected from the following ranges: 0.2 mm-1 mm, 0.15 mm-1 mm, 0.3 mm-1 mm, 0.2 mm-0.5 mm, 0.15 mm-0.5 mm, 0.3 mm-0.5 mm, and the like.

By controlling the size of the above gap within a suitable range, the positive and negative tab parts may be prevented from scratching the adjacent structural layers in different states, and the proportion of the expanded active area may be increased as much as possible.

In some implementations, the solid-state battery core has a laminated structure.

Without limitation, the size of the solid-state battery core may be various sizes known in the applicable field, which may include, but is not limited to, the size specifications of battery products such as button batteries and notebook batteries.

In some implementations, the solid electrolyte part includes at least one solid electrolyte layer. It may be understood that a solid electrolyte layer is disposed between any adjacent positive electrode layer and negative electrode layer. Therefore, the number of the solid electrolyte layers in the solid electrolyte part matches the number of the electrode layers in the electrode part.

In some implementations, the positive electrode body includes at least one positive electrode layer, each positive electrode layer is provided with slots corresponding to the first composite slot and the second composite slot, and a positive tab is disposed at the groove corresponding to the first composite slot in the at least one positive electrode layer;
the negative electrode body includes at least one negative electrode layer, each negative electrode layer is provided with slots corresponding to the second composite slot and the first composite slot, and a negative tab is disposed at the groove corresponding to the second composite slot in the at least one negative electrode layer;
the solid electrolyte part includes at least one solid electrolyte layer, and any adjacent positive electrode layer and negative electrode layer are separated by the solid electrolyte layer; and each solid electrolyte layer is provided with empty slots corresponding to the first composite slot and the second composite slot respectively.

In the present application, unless otherwise specified, the slot corresponding to the first composite slot in the positive electrode layer is recorded as a "positive tab slot", the positive tab slot may be provided with a positive tab or may be an empty slot, but at least one positive tab slot is provided with a positive tab. It may be understood that the slots in the positive electrode layer corresponding to the second composite slots are all empty slots.

In the present application, unless otherwise specified, the slot corresponding to the second composite slot in the negative electrode layer is recorded as a "negative tab slot", the negative tab slot may be provided with a negative tab or may be an empty slot, but at least one negative tab slot is provided with a negative tab. It may be understood that the slots in the negative electrode layer corresponding to the first composite slots are all empty slots.

In the present application, unless otherwise specified, the "empty slot" includes a slot without tabs disposed in the electrode layer, and also includes a slot in the solid electrolyte layer corresponding to two composite slots. The empty slots involved in the present application at least include a first empty slot in the positive electrode layer corresponding to the second composite slot, a second empty slot in the negative electrode layer corresponding to the first composite slot, a fourth empty slot in the solid electrolyte layer corresponding to the first composite slot, and a third empty slot in the solid electrolyte layer corresponding to the second composite slot.

In some implementations, the positive electrode body includes at least one positive electrode layer, each positive electrode layer independently includes a positive electrode current collector layer and a positive electrode active material layer located on at least one side of the positive electrode current collector layer, the positive electrode layer is provided with a positive tab slot, all the positive tab slots in the positive electrode body jointly form a part of the first composite slot, the positive electrode current collector layer in the at least one positive electrode layer is connected to a positive tab at the corresponding positive tab slot, and all the positive tabs connected to the positive electrode body jointly form at least a part of the positive tab part; and
the negative electrode body includes at least one negative electrode layer, each negative electrode layer independently includes a negative electrode current collector layer and a negative electrode active material layer located on at least one side of the negative electrode current collector layer, the negative electrode layer is provided with a negative tab slot, all the negative tab slots in the negative electrode body jointly form a part of the first composite slot, the negative electrode current collector layer in the at least one negative electrode layer is connected to a negative tab at the corresponding negative tab slot, and all the negative tabs connected to the negative electrode body jointly form at least a part of the negative tab part.

In the present application, unless otherwise specified, the "positive tab slot" refers to a slot in the positive electrode layer corresponding to the position of the positive tab part. For any positive electrode layer, the positive tab slot may be provided with a positive tab or may not be provided with a positive tab, as long as the number of positive tabs connected to all positive electrode layers is greater than or equal to 1.

In the present application, unless otherwise specified, the "negative tab slot" refers to a slot in the negative electrode layer corresponding to the position of the negative tab part. For any one of the negative electrode layers, the negative tab may be disposed at the negative tab slot, or the negative tab may not be disposed at the negative tab slot, as long as the number of the negative tabs connected to all the negative electrode layers is greater than or equal to 1.

In the thickness direction of the positive electrode layer, the positive electrode active material layer may be located on at least one side of the positive electrode current collector layer. The positive electrode active material layer may be located on only one side of the positive electrode current collector layer, or the positive electrode active material layer may be disposed on both sides of the positive electrode current collector. In some implementations, the thickness direction of the positive electrode layer coincides with the Z direction.

In the thickness direction of the negative electrode layer, the negative electrode active material layer may be located on at least one side of the negative electrode current collector layer. The negative electrode active material layer may be located on only one side of the negative electrode current collector layer, or the negative electrode active material layer may be provided on both sides of the negative electrode current collector. In some implementations, the thickness direction of the negative electrode layer coincides with the Z direction.

Without limitation, the positive tab may be made of the same material as the positive electrode current collector layer, and further, the positive tab and the positive electrode current collector layer may be derived from the same current collector film. Such positive tabs may be referred to as "soft tabs".

Without limitation, the negative tab may be made of the same material as the negative electrode current collector layer, and further, the negative tab and the negative electrode current collector layer may be derived from the same current collector film. Such negative tabs may be referred to as "soft tabs".

When the solid-state battery core adopts the foregoing laminated structure, at the first composite slot, the positive tab slot on the positive electrode layer, the empty slot on the negative electrode layer and the empty slot on the solid electrolyte layer may be combined to form a concave space for the positive tab part to bend inward. At the second composite slot, the negative tab slot on the negative electrode layer, the empty slot on the positive electrode layer, and the empty slot on the solid electrolyte layer may be combined to form a concave space for the negative tab part to bend inward.

In some implementations, all the positive tabs connected to the positive electrode body jointly form at least a part of the positive tab part, and in this case, the positive tab part may further include a positive rigid tab part.

In some implementations, all the positive tabs connected to the positive electrode body jointly form the positive tab part.

In some implementations, all the negative tabs connected to the negative electrode body jointly form at least a part of the negative tab part, and in this case, the negative tab part may further include a negative rigid tab part.

In some implementations, all the negative tabs connected to the negative electrode body jointly form the negative tab part.

In some implementations, there is one positive electrode layer in the positive electrode body; and there is one negative electrode layer in the negative electrode body.

In some implementations, there is a plurality of positive electrode layers in the positive electrode body; and the number of the negative electrode layers in the negative electrode body matches the number of the positive electrode layers in the positive electrode body.

When there is a plurality of positive electrode layers in the positive electrode body and the number of the negative electrode layers in the negative electrode body matches the number of the positive electrode layers in the positive electrode body, the laminated structure corresponds to a multi-layer laminated structure, and at this time, the foreordaining structure design of the active expansion region is beneficial to gaining more volumetric energy density at the tab space.

Without limitation, there is one or more positive electrode layers in the positive electrode body. The more the number of positive electrode layers in the positive electrode body, the thicker the battery. The appropriate number of layers of the positive electrode layers may be selected as required depending on the size of the solid-state battery.

Based on the number of the positive electrode layers in the positive electrode body, there may be one or more positive electrode layers, and generally, the number of the negative electrode layers in the negative electrode body is not less than the number of the positive electrode layers in the positive electrode body.

In some implementations, the number of the positive electrode layers in the positive electrode body is equal to the number of the negative electrode layers in the negative electrode body.

In some implementations, the number N_{P} of positive electrode layers in the positive electrode body is ≥1, optionally, N_{P}≥2, further optionally, N_{P}5, still further optionally, N_{P}≥10, still further optionally, N_{P}≥20, still further optionally, N_{P}≥30, still further optionally, N_{P}≥40, and still further optionally, N_{P}≥50. Without limitation, the number N_{P} of the positive electrode layers in the positive electrode body is 1 to 60, and optionally 2 to 60. The number N_{P} of positive electrode layers in the positive electrode body may also be any one of the following values or selected from an interval formed by any two of the following values: 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, and the like.

In some implementations, the number of the positive electrode layers in the positive electrode body is 1.

In some implementations, the plurality of positive electrode layers in the positive electrode body are connected to positive tabs; and the plurality of negative electrode layers in the negative electrode body are connected to the negative tab.

In the present application, unless otherwise specified, when the plurality of positive electrode layers in the positive electrode body are all connected to the positive tab, the plurality of positive tabs are stacked in the Z direction to form a positive tab part having a multilayer structure, and in this case, the "positive tab part" may also be referred to as a positive tab laminate.

In the present application, unless otherwise specified, when the plurality of negative electrode layers in the negative electrode body are all connected to the negative tabs, the plurality of negative tabs are stacked in the Z direction to form the negative tab part of the multilayer structure, and in this case, the "negative tab part" may also be referred to as a negative tab laminate.

When the plurality of positive electrode layers in the positive electrode body are all connected to the positive tabs, and the plurality of negative electrode layers in the negative electrode body are all connected to the negative tabs, it is more beneficial to reducing the waste of space in the case caused by laminating the plurality of tabs.

In the solid-state battery core, the positive electrode layer is further provided with an empty slot corresponding to the second composite slot, which may be denoted as a first empty slot; the negative electrode layer is further provided with an empty slot corresponding to the first composite slot, which may be denoted as a second empty slot; and the solid electrolyte layer is provided with empty slots corresponding to the first composite slot and the second composite slot, respectively, the empty slot corresponding to the first composite slot may be denoted as a fourth empty slot, and the empty groove corresponding to the second composite slot may be denoted as a third empty slot.

In the solid-state battery core, the positive tab slot, the fourth empty slot, and the second empty slot match positionally to provide a first composite slot that accommodates at least a part of the positive tab part, and the negative tab slot, the third empty slot, and the first empty slot match positionally to provide a second composite slot that accommodates at least a part of the negative tab part.

In some implementations, the present application provides a solid-state battery core, including a positive electrode part, a solid electrolyte part and a negative electrode part which are stacked, where the positive electrode part and the negative electrode part are separated by the solid electrolyte part; the positive electrode part includes a positive electrode body and a positive tab part connected to the positive electrode body, and the negative electrode part includes a negative electrode body and a negative tab part connected to the negative electrode body; and
the positive electrode body includes at least one positive electrode layer, the at least one positive electrode layer is connected to a positive tab, and all the positive tabs connected to the positive electrode body jointly form at least a part of the positive tab part; the negative electrode body includes at least one negative electrode layer, the at least one negative electrode layer is connected to a negative tab, and all the negative tabs connected to the negative electrode body jointly form at least a part of the negative tab part;
at least one edge extending in the X direction, the solid-state battery core is provided with two composite slots, which are respectively denoted as a first composite slot and a second composite slot; and the first composite slot is configured to accommodate at least a part of the positive tab part, and the second composite slot is configured to accommodate at least a part of the negative tab part.

In some implementations, the present application provides a solid-state battery core, including a positive electrode part, a solid electrolyte part and a negative electrode part which are stacked, where the positive electrode part and the negative electrode part are separated by the solid electrolyte part; the positive electrode part includes a positive electrode body and a positive tab part connected to the positive electrode body, and the negative electrode part includes a negative electrode body and a negative tab part connected to the negative electrode body; and
the positive electrode body includes a plurality of positive electrode layers, each of the plurality of positive electrode layers is connected to a positive tab, and all the positive tabs connected to the positive electrode body jointly form a positive tab laminate; the negative electrode body includes a plurality of negative electrode layers, each of the plurality of negative electrode layers is connected to a negative tab, and all the negative tabs connected to the negative electrode body jointly form a laminate;
at least one edge extending in the X direction, the solid-state battery core is provided with two composite slots, which are respectively denoted as a first composite slot and a second composite slot; and the first composite slot is configured to accommodate at least a part of the positive tab part, and the second composite slot is configured to accommodate at least a part of the negative tab part.

In the present application, the "tab laminate" includes a positive tab laminate and a negative tab laminate. It may be understood that the plurality of tabs in the tab laminate are each connected to a corresponding electrode layer, and further, each connected to a current collector layer in the corresponding electrode layer. The plurality of positive tabs in the positive tab laminate are each connected to a corresponding positive electrode layer, and further, are each connected to a positive electrode current collector layer in the corresponding positive electrode layer. The plurality of negative tabs in the negative tab laminate are each connected to a corresponding negative electrode layer, and further, are each connected to a negative electrode current collector layer in the corresponding negative electrode layer.

In a second aspect of the present application, provided is a solid-state battery cell, including the solid-state battery core described in the first aspect of the present application.

In a third aspect of the present application, provided is a solid-state battery, including the solid-state battery core described in the first aspect of the present application.

In some implementations, the solid-state battery is an all-solid-state battery.

The solid-state battery cell and the solid-state battery including the foregoing solid-state battery core increase the volume of the electrode body at the height of the tab, increase the space occupancy of the electrode active material layer, and greatly improve the volumetric energy density.

Without limitation, a prefabricated positive electrode sheet, a prefabricated solid electrolyte membrane and a prefabricated negative electrode sheet may be sequentially stacked, the solid electrolyte membrane is placed between the positive electrode sheet and the negative electrode sheet, and the solid electrolyte membrane is pressed by a hot roller to prepare a solid-state battery core.

In some implementations, the solid-state battery core may be prepared by a method including steps S100, S200, S300, and S400:
S100: A positive electrode sheet provided with a positive tab slot and a first empty slot are prepared, where the positive electrode sheet includes a positive electrode current collector layer, a positive electrode active material layer located on at least one side of the positive electrode current collector, and a positive tab connected to the positive electrode current collector layer, and the positive tab is disposed at the positive tab slot;
S200: A negative electrode sheet provided with a negative tab slot and a second empty slot is prepared, where the negative electrode sheet includes a negative electrode current collector layer, a negative electrode active material layer located on at least one side of the negative electrode current collector, and a negative tab connected to the negative electrode current collector layer, and the negative tab is disposed at the negative tab slot;
S300: A solid electrolyte membrane provided with a third empty slot and a fourth empty slot is prepared; and
S400: The positive electrode sheet, the solid electrolyte membrane and the negative electrode sheet are sequentially stacked in the order of "negative electrode sheet-solid electrolyte membrane-positive electrode sheet-solid electrolyte membrane" to obtain a laminated member, so that the positive tab slot, the fourth empty slot and the second empty slot are aligned in contour and form a first composite slot, and the negative tab slot, the third empty slot and the first empty slot are aligned in contour and form a second composite slot; all positive tabs provided by the positive electrode sheet are disposed at the first composite slot and jointly form at least a part of the positive tab part; all the negative tabs provided by the negative electrode sheet are disposed at the second composite slot and jointly form at least a part of the negative tab part; and the stacked laminated member is subjected to hot rolling treatment to prepare a solid-state battery core. Each positive electrode sheet forms a positive electrode part, each negative electrode sheet forms a negative electrode part, and each solid electrolyte membrane forms a solid electrolyte part.

Based on the number of the positive electrode sheets, there may be one or more stacked positive electrode sheets, and generally, the number of the stacked negative electrode sheets is not less than the number of the stacked positive electrode sheets.

In some implementations, the number of stacked positive electrode sheets is equal to the number of stacked negative electrode sheets.

In some implementations, there are a plurality of stacked positive electrode sheet; and the plurality of positive tab contours of the plurality of positive electrode sheets are aligned and jointly form a positive tab laminate, at least a part of the positive tab laminate is accommodated in the first composite slot, the plurality of negative tab contours of the plurality of negative electrode sheets are aligned and jointly form a negative tab laminate, and at least a part of the negative tab laminate is accommodated in the second composite slot.

In the present application, unless otherwise specified, the "empty slots" in the positive electrode sheet, the negative electrode sheet and the solid electrolyte membrane refer to that the space of the corresponding slots is reserved before assembling into the solid-state battery core, and after assembling into the battery core, the slots s may participate in forming the composite slots to provide the space matching the tab parts. For example, in some implementations, in addition to the positive tab slot matching the position of the positive tab, the positive electrode sheet for forming the positive electrode layer also reserves a first empty slot for matching the position of the negative tab part in the solid-state battery core. In addition to the negative tab slot matching the position of the negative tab, the negative electrode sheet for forming the negative electrode layer also reserves a second empty slot for matching the position of the positive tab part in the solid-state battery core. The solid electrolyte membrane for forming the solid electrolyte layer reserves a third empty slot for matching the position of the negative tab part in the solid-state battery core and a fourth empty slot for matching the position of the positive tab part in the solid-state battery core.

In the present application, in the "first empty slot", "second empty slot", "third empty slot", "fourth empty slot", the terms "first", "second", "third", and "fourth" are used for descriptive purposes only, and should not be construed as indicating or implying relative importance or number, nor as implicitly indicating the importance or quantity of technical features indicated. Also, "first", "second", "third", and "fourth" are used merely for the purpose of describing a non-exhaustive list, and it should be understood that they do not constitute a closed limitation on the quantity.

In some implementations, the solid-state battery core may be prepared by a method including steps S100, S200, S300, and S400:
S100: A positive electrode sheet provided with a positive tab slot and a first empty slot are prepared, where the positive electrode sheet includes a positive electrode current collector layer, a positive electrode active material layer located on at least one side of the positive electrode current collector, and a positive tab connected to the positive electrode current collector layer, and the positive tab is disposed at the positive tab slot;
S200: A negative electrode sheet provided with a negative tab slot and a second empty slot is prepared, where the negative electrode sheet includes a negative electrode current collector layer, a negative electrode active material layer located on at least one side of the negative electrode current collector, and a negative tab connected to the negative electrode current collector layer, and the negative tab is disposed at the negative tab slot;
S300: A solid electrolyte membrane provided with a third empty slot and a fourth empty slot is prepared; and
S400: A plurality of positive electrode sheets, a plurality of solid electrolyte membranes and a plurality of negative electrode sheets in the order of "negative electrode sheet-solid electrolyte membrane-positive electrode sheet-solid electrolyte membrane" to obtain a laminated member, so that the positive tab slot, the fourth empty slot and the second empty slot are aligned in contour and form a first composite slot, and the negative tab slot, the third empty slot and the first empty slot are aligned in contour and form a second composite slot; the plurality of positive tabs of the plurality of positive electrode sheets are aligned in contour and jointly form a positive tab laminate, at least a part of the positive tab laminate is accommodated in the first composite slot, the plurality of negative tabs of the plurality of negative electrode sheets are aligned in contour and jointly form a negative tab laminate, and at least a part of the negative tab laminate is accommodated in the second composite slot; and the stacked laminated member is subjected to hot rolling treatment to prepare a solid-state battery core.

In some implementations, a method for preparing a solid-state battery core further includes one or both of step S500 and step S600:
S500: At least a part of the positive tab part is bent into the first composite slot to obtain a positive tab bending part in the first composite slot; and
S600: At least a part of the negative tab part is bent into the second composite slot to obtain the negative tab bending part in the second composite slot.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly, preferably sequentially. For example, a method M includes steps (a) and (b),indicating that the method M may include sequentially performed steps (a) and (b), or sequentially performed steps (b) and (a). For another example, the method M may further include step (c), indicating that step (c) may be added to the method M in any order. For example, the method M may include steps (a), (b), and (c), or steps (a), (c), and (b), or steps (c), (a), and (b), and the like.

The positive tab slot and the first empty slot in the positive electrode sheet, the negative tab slot and the second empty slot in the negative electrode sheet, and the third empty slot and the fourth empty slot in the solid electrolyte membrane may all be prepared by a laser cutting technology.

Taking wet preparation of the positive electrode sheet as an example, the positive electrode sheet provided with the positive tab slot and the first empty slot may be prepared by a method including the following steps:
S12: A positive electrode slurry is coated on a preset region on at least one side surface of a positive electrode current collector film, a concave blank region is reserved at preset positions of the positive tab slot and the first empty slot, and drying is performed to form a positive electrode active material layer having a concave blank region, to obtain a positive electrode multilayer body including the positive electrode current collector and the positive electrode active material layer having the concave blank region; and
S14: The positive electrode current collector film is die-cut by means of the laser cutting technology to obtain a positive electrode current collector layer matching the shape of the positive electrode active material layer, a positive tab still connected to the positive electrode current collector layer is formed at a preset position of the positive tab slot, and a first empty slot is formed at a preset position of the first empty slot. Further, the positive tab slot corresponds to a first composite slot in the solid-state battery core that provides space for the positive tab part, and the first empty slot corresponds to a second composite slot in the solid-state battery core that is configured to accommodate at least a part of the negative tab part.

It may be understood that in step S12, the positive electrode slurry is composed of a constituent raw material of the positive electrode active material layer and the solvent, and after drying, the solvent is removed, and the remaining components form the corresponding positive electrode active material layer.

In step S12, the concave blank region is not coated with the positive electrode slurry, and after drying, the formed positive electrode active region correspondingly has a concave blank region, and the concave contour of the concave blank region may guide a die-cutting trajectory in the subsequent die-cutting step.

The positive tab formed in step S14 is generally classified as a "soft tab".

In step S14, when die cutting is performed, a part of the positive electrode current collector film at the positive tab that matches the width of the positive tab slot is retained, so that the positive tab is kept connected to the positive electrode current collector layer, that is, the positive tab and the positive electrode current collector are integrated at this time; and in the width direction, two sides of the positive tab are separated from the edge of the positive electrode current collector layer, so that the positive tab may be bent in a direction perpendicular to the surface of the positive electrode current collector film. Further, gaps are disposed between both sides of the positive tab and the edges of the positive electrode current collector layer.

In step S14, when die cutting is performed, the positive electrode current collector film at the first empty slot is cut and removed. When the solid-state battery core is subsequently assembled, the first empty slot can correspond to the position of the negative tab slot, so that the negative tab may be bent in a direction perpendicular to the surface of the negative electrode sheet. In addition, in the solid-state battery core in which the number of the negative electrode layers of the negative electrode body is greater than 1 and the number of the negative tabs is greater than 1, no positive electrode current collector film remains between the plurality of negative tabs in the negative tab part.

Taking wet preparation of the negative electrode sheet as an example, the negative electrode sheet provided with the negative tab slot and the second empty slot may be prepared by a method including the following steps:
S22: A negative electrode slurry is coated on a preset region on at least one side surface of the negative electrode current collector film, a concave blank region is formed at a preset position of the negative tab slot and the second empty slot, and drying is performed to form a negative electrode active material layer having a concave blank region, to obtain a negative electrode multilayer body including the negative electrode current collector and the negative electrode active material layer having the concave blank region; and
S24: The negative electrode current collector film is die-cut by means of a laser cutting technology to obtain a negative electrode current collector layer matching the negative electrode active material layer in shape, a negative tab remaining connected to the negative electrode current collector layer is formed at a preset position of the negative tab slot, and a second empty slot is formed at a preset position of the second empty slot. Further, the negative tab slot corresponds to a second composite slot configured to accommodate at least a part of the negative tab part in the solid-state battery core, and the second empty slot corresponds to a first composite slot configured to accommodate at least a part of the positive tab part in the solid-state battery core.

It may be understood that in step S22, the negative electrode slurry is composed of a constituent raw material of the negative electrode active material layer and the solvent, and after drying, the solvent is removed, and the remaining components form the corresponding negative electrode active material layer.

In step S22, the concave blank region is not coated with the negative electrode slurry, and after drying, the formed negative electrode active region correspondingly has a concave blank region, and the concave contour of the concave blank region may guide a die-cutting trajectory in the subsequent die-cutting step.

The negative tab formed in step S24 is usually classified as a "soft tab".

In step S24, when die cutting is performed, a part of the negative electrode current collector film at the negative tab that matches the width of the negative tab slot is retained, so that the negative tab remains connected to the negative electrode current collector layer; and in the width direction, two sides of the negative tab are separated from the edge of the negative electrode current collector layer, so that the negative tab may be bent in a direction perpendicular to the surface of the negative current collector film. Further, gaps are disposed between both sides of the negative tab and the edge of the negative electrode current collector layer.

In step S24, when die cutting is performed, the negative electrode current collector film at the second empty slot is cut and removed. During subsequent assembly of the solid-state battery core, the second empty slot can correspond to the position of the positive tab slot, so that the positive tab may be bent in a direction perpendicular to the surface of the positive electrode sheet. In addition, in the solid-state battery core in which the number of positive electrode layers of the positive electrode body is greater than 1 and the number of positive tabs is greater than 1, no negative electrode current collector film remains between the plurality of positive tabs in the positive tab part.

Taking preparation of the solid electrolyte membrane as an example, the solid electrolyte membrane provided with the third empty slot and the fourth empty slot may be prepared by a method including the following steps:
S34: The solid electrolyte film is die-cut by means of a laser cutting technology, to obtain a solid electrolyte membrane that matches shapes of the positive electrode sheet and the negative electrode sheet, a fourth empty slot is formed at a preset position of the positive tab in the positive electrode sheet, and a third empty slot is formed at a preset position of the negative tab in the negative electrode sheet. Further, the fourth empty slot corresponds to a first composite slot configured to accommodate at least a part of the positive tab part in the solid-state battery core, and the third empty slot corresponds to a second composite slot configured to accommodate at least a part of the negative tab part in the solid-state battery core.

Without limitation, the solid electrolyte film may be prepared by any suitable known method, for example, the constituent raw materials (such as a solid electrolyte powder) of the solid electrolyte film may be pressed into a film shape under pressure to obtain the solid electrolyte film.

The solid-state battery includes at least one solid-state battery cell. The solid-state battery may include one or more solid-state battery cells.

In the present application, unless otherwise specified, the "solid-state battery cell" refers to a basic unit capable of implementing mutual conversion between chemical energy and electrical energy. The constituent parts are all solid-state. In some implementations, the solid-state battery cell may be an all-solid-state battery cell.

In the present application, unless otherwise specified, the "all-solid-state battery cell" refers to a solid-state battery cell in which the electrolyte in the battery is a solid electrolyte, and in this case, the positive electrode layer, the negative electrode layer and the electrolyte part are all solid materials, and the battery cell is not provided with a liquid electrolyte, and thus may be referred to as an "all-solid-state battery cell".

Without limitation, the solid-state battery cell, which may be an all-solid-state battery cell, may include a positive electrode layer, a solid electrolyte layer, and a negative electrode layer, where the solid electrolyte layer is located between the positive electrode layer and the negative electrode layer. In a charging and discharging process of the battery, active ions are intercalated and deintercalated back and forth between a positive electrode layer and a negative electrode layer. The solid electrolyte layer plays a role of conducting ions between the positive electrode layer and the negative electrode layer, and may further play a role of isolating the positive electrode and the negative electrode, to prevent the positive electrode and the negative electrode from being short-circuited.

In some implementations, the solid-state battery cell 5 includes a solid-state battery core 52.

In some implementations, the solid-state battery core is an all-solid-state battery core.

In some implementations, the solid-state battery core 52, which may be an all-solid-state battery core, includes a positive electrode layer, a solid electrolyte layer, and a negative electrode layer which are sequentially stacked.

In some implementations, the solid-state battery may include an outer package. The outer package may be configured to package the solid-state battery core described above.

In some implementations, the outer package of the solid-state battery may be a hard casing, for example, a hard plastic casing, an aluminum casing, or a steel casing. The outer package of the solid-state battery may also be a pouch, such as a bag-type pouch. A material of the pouch may be plastic, and further, non-limiting examples of the plastic may include one or more of polypropylene, polybutylene terephthalate, and polybutylene succinate.

The shape of the solid-state battery cell is not particularly limited in the present application, and may be a cylindrical shape, a square shape, or any other shape. For example, FIG. 3 shows a solid-state battery cell 5 of a square structure as an example.

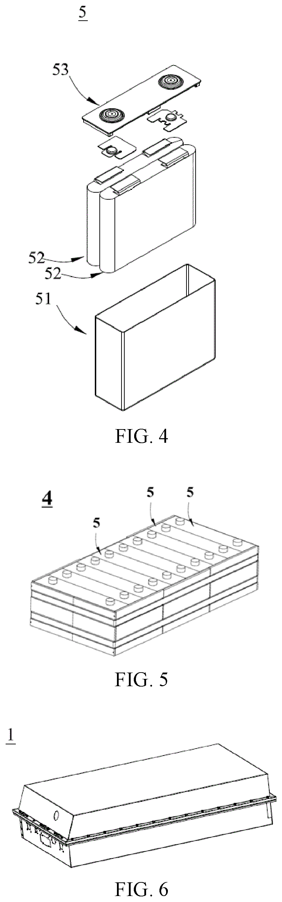

In some implementations, referring to FIG. 4, the outer package may include a housing 51 and a cover plate 53. The housing 51 may include a bottom plate and side plates connected to the bottom plate, and the bottom plate and the side plates define an accommodating chamber. The housing 51 is provided with an opening communicating with the accommodating chamber, and the cover plate 53 can cover the opening to close the accommodating chamber. The solid-state battery core 52 is packaged in the accommodating chamber. There may be one or more solid-state battery cores 52 included in the solid-state battery cell 5, and those skilled in the art may perform selection based on actual requirements.

The solid-state battery may be a battery module 4 or a battery pack 1.

The battery module includes at least one solid-state battery cell. There may be one or more solid-state battery cells included in the battery module, and those skilled in the art may select a proper quantity based on an application and a capacity of the battery module.

FIG. 5 shows a battery module 4 as an example. Referring to FIG. 5, in the battery module 4, a plurality of solid-state battery cells 5 may be arranged sequentially in the length direction of the battery module 4. Certainly, the battery cells may alternatively be arranged in any other manner. Further, the plurality of solid-state battery cells 5 may be fastened by using fasteners.

Optionally, the battery module 4 may further include a casing having an accommodating space in which the plurality of solid-state battery cells 5 are accommodated.

In some embodiments, the above battery modules may also be assembled into a battery pack, and there may be one or more battery modules included in the battery pack, and those skilled in the art may select a proper quantity according to the application and capacity of the battery pack.

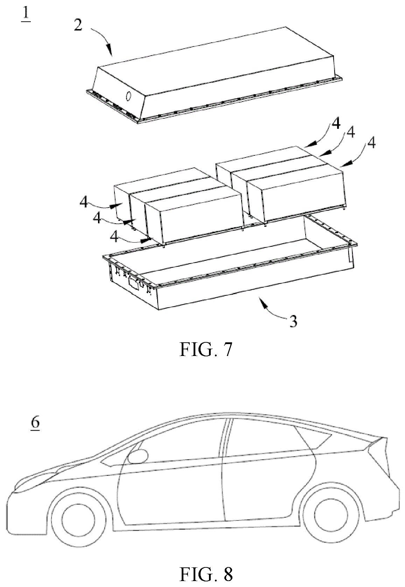

FIG. 6 and FIG. 7 show a battery pack 1 as an example. Referring to FIG. 6 and FIG. 7, a battery case and a plurality of battery modules 4 arranged in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

In a third aspect of the present application, provided is an electrical apparatus, including at least one of the solid-state battery core described in the first aspect of the present application, the solid-state battery cell described in the second aspect of the present application, and the solid-state battery described in the third aspect of the present application.

In some implementations, the electrical apparatus includes at least one of the solid-state batteries according to any one implementation of the present application.

Without limitation, the solid-state battery may be used as a power supply for the electrical apparatus, or as an energy storage unit for the electrical apparatus. The electrical apparatus may include, but is not limited thereto, a mobile device, an electric vehicle, an electric train, a ship, a satellite, an energy storage system, and the like. The mobile device may be, for example, a mobile phone, a notebook computer, or the like. The electrical apparatus may be, for example, a full electric vehicle, a hybrid electric vehicle, a plug-in hybrid electric vehicle, an electric bicycle, an electric scooter, an electric golf cart, an electric truck, an electric motorcycle, an electric tool, or the like, but is not limited thereto. The electrical apparatus may also be applied to the fields of military equipment, aerospace, and the like, as well as to energy storage power systems for hydroelectric, thermal, wind, and solar power stations.

As an electrical apparatus, the solid-state battery may be selected according to use requirements of the electrical apparatus.

FIG. 8 shows an electrical apparatus 6 as an example. The electrical apparatus is a pure electric vehicle, a hybrid electric vehicle, a plug-in hybrid electric vehicle, or the like. In order to meet the demand for high power and high energy density of a battery by the electrical apparatus, a battery pack or a battery module may be used.

In another example, the electrical apparatus may be a cell phone, a tablet computer, a notebook computer, or the like. This apparatus is generally required to be thin and lightweight, and may use a solid-state battery as a power supply.

Embodiments of the present application are described below. The embodiments described below are illustrative only and are not to be construed as limiting the present application. In the embodiments, specific techniques or conditions are not indicated, and they are performed according to techniques or conditions described above, according to techniques or conditions described in documents in the art, or according to the specification of the product. The reagents or instruments used without specifying the manufacturer(s) are commercially available conventional products, or can be synthesized from commercially available products by a conventional mode.

In the following examples, with respect to a solid electrolyte layer, a solid electrolyte film, a positive electrode current collector film, a positive electrode active material layer, a positive electrode sheet, a negative electrode current collector film, a negative electrode active material layer, and a negative electrode sheet: The respective width directions are consistent with the width direction (X direction) of the solid-state battery core, the respective height directions are consistent with the height direction (Y direction) of the solid-state battery core, and the respective thickness directions are consistent with the thickness direction (Z direction) of the solid-state battery core.

In the following examples, the positive electrode sheet or the negative electrode sheet is provided with the tab slot, the corresponding tab, and the reserved empty slot at the edge of the same side in the height direction of the electrode sheet, and correspondingly, the positive tab part and the negative tab part are disposed on the same side of the solid-state battery core in the height direction. In other embodiments, when the positive tab part and the negative tab part are disposed on different sides of the solid-state battery core in the height direction, the utilization ratio ψ_{Y} of the active expansion region in the Y direction and the two dimensional utilization ratio ψ_{A} of the active expansion region will be higher.

In the following examples, as a non-limiting example, the shapes and sizes of the positive tab slot, the second empty slot, the fourth empty slot and the first composite slot in the X direction and the Y direction are consistent, the shapes and sizes of the negative tab slot, the first empty slot, the third empty slot and the second composite slot in the X direction and the Y direction are consistent, and the sizes of the positive tab slot and the negative tab slot in the X direction and the Y direction are also basically the same. For each of the above slots, the sloth depth is equal to the slot height, the width direction of the slot is consistent with the X direction, the height or depth direction of the slot is consistent with the Y direction, and the thickness direction of the slot is consistent with the Z direction.

In the following examples, when the positive electrode sheet and the negative electrode sheet are prepared, after die-cutting, the width of the positive tab and the width of the negative tab are respectively slightly smaller than the width of the corresponding slot, that is, in the width direction of the electrode sheet, gaps are respectively disposed between the positive tab and the edge on one side of the corresponding tab slot and between the negative tab and the edge on the other side of the corresponding tab slot, and the gap on either side is in a range of 10 µm to 5000 µm and in a range of 0.1 mm to 1 mm. Correspondingly, in the solid-state battery core, gaps are disposed between the positive tab part and the negative tab part and the edges of the two sides of the corresponding composite slot, and the gap on any side is in a range of 10 µm to 5000 µm and in a range of 0.1 mm to 1 mm.

In the following examples, as a non-limiting example, the height of the positive tab and the height of the negative tab are both set to 15 mm.

In the following examples, as a non-limiting example, a solid-state battery core of a laminated structure is used.

### Example 1.

Reference is made to the schematic diagram of the preparation process of the positive electrode sheet and the negative electrode sheet shown in FIG. 2.

### (1) Preparation of a positive electrode sheet 100.

S12: A positive electrode slurry was coated on two side surfaces of a positive electrode current collector film 111, concave blank regions were reserved for a positive tab slot 122 and a first empty slot 124 respectively, and drying was performed to form a positive electrode active region 120 having a positive electrode concave blank region 121;
S14: The positive electrode current collector film 111 was die-cut by means of a laser cutting technology to obtain a positive electrode current collector layer matching the shape of the positive electrode active region, the positive electrode active region corresponded to the positive electrode active material layer, a positive tab 130 connected to the positive electrode current collector layer was formed at a preset position of the positive tab slot 122, and the first empty slot 124 was formed at a preset position of the first empty slot. Further, the positive tab slot 122 corresponded to a first composite slot 1302 in the solid-state battery core 52 for accommodating a part of the positive tab part 1300, and the first empty slot 124 corresponded to a second composite slot 3302 in the solid-state battery core 52 for accommodating a part of the negative tab part 3300.

### (2) Preparation of a negative electrode sheet 300.

S22: A negative electrode slurry was coated on two side surfaces of a negative electrode current collector film 311, concave blank regions were reserved for a negative tab slot 322 and a second empty slot 324 respectively, and drying was performed to form a negative electrode active region 320 having a negative electrode concave blank region 321;
S24: The negative electrode current collector film 311 was die-cut by means of a laser cutting technology to obtain a negative electrode current collector layer matching the shape of the negative electrode active region, the negative electrode active region corresponded to the negative electrode active material layer, the negative tab 320 connected to the negative electrode current collector layer was formed at a preset position of the negative tab slot 322, and the second empty slot 324 was formed at a preset position of the second empty slot. Further, the negative tab slot 322 corresponded to the second composite slot 3302 for accommodating a part of the negative tab part 3300 in the solid-state battery core 52, and the second empty slot 324 corresponded to the first composite slot 1302 for accommodating a part of the positive tab part 1300 in the solid-state battery core 52.

### (3) Preparation of a solid electrolyte membrane

S34: A solid electrolyte film was die-cut by means of a laser cutting technology, to obtain a solid electrolyte film that matches shapes of the positive electrode sheet and the negative electrode sheet, a fourth empty slot was reserved for the positive tab in the positive electrode sheet, and a third empty slot was reserved for the negative tab in the negative electrode sheet. Further, the fourth empty slot corresponded to the first composite slot 1302 for accommodating a part of the positive tab part 1300 in the solid-state battery core 52, and the third empty slot corresponded to the second composite slot 3302 for accommodating a part of the negative tab part 3300 in the solid-state battery core 52.

(4) Assembly was performed to obtain the solid-state battery core, and the structure thereof might refer to FIG. 1.

The positive electrode sheet 100, the solid electrolyte membrane and the negative electrode sheet 300 prepared above were sequentially stacked in an order of "negative electrode sheet-solid electrolyte membrane-positive electrode sheet-solid electrolyte membrane" to prepare a laminate, so that the positive tab slot 122, the fourth empty slot and the second empty slot were aligned in contour and formed a first composite slot 1302, and the negative tab slot 322, the third empty slot and the first empty slot were aligned in contour and formed a second composite slot 3302; the positive tabs 130 of the positive electrode sheet 100 were aligned in contour and jointly formed a positive tab part 1300, a part of the positive tab part 1300 was accommodated in the first composite slot 1302, the negative tabs 3300 of the negative electrode sheet 300 were aligned in contour and jointly formed a negative tab part 3300, and a part of the negative tab part 330 was accommodated in the second composite slot 3302; and the stacked laminated member was subjected to hot rolling treatment to prepare the solid-state battery core 52, the region corresponding to the positive electrode active region in the positive electrode sheet 100 provided the positive electrode layer 10, the region corresponding to the negative electrode active region in the negative electrode sheet 300 provided the negative electrode layer 30, and the solid electrolyte membrane provided the solid electrolyte layer 20. All the positive electrode layers in the solid-state battery core jointly form a positive electrode body, and all the negative electrode layers in the solid-state battery core jointly form a negative electrode body.

In this example, the number of positive electrode sheets in the laminated member is 5; and the plurality of positive electrode layers in the solid-state battery core jointly form a positive electrode body, and the plurality of negative electrode layers in the solid-state battery core jointly form a negative electrode body.

In this example, the positive tab part includes a plurality of positive tabs and corresponds to the positive tab laminate; and the negative tab part includes a plurality of negative tabs and corresponds to the negative tab laminate.

A plurality of positive tabs of the positive tab part were welded into positive soft tabs, and aluminum rigid tabs were connected; and a plurality of negative tabs of the negative tab part were welded into negative soft tabs, and a nickel rigid tab was adapted. The positive soft tab was pre-bent, and at least a part of the positive soft tab beyond the first composite slot was placed in the first composite slot; and the negative soft tab was pre-bent, and at least a part of the negative soft tab beyond the second composite slot was placed in the second composite slot.

(5) Aluminum plastic film encapsulation: Pits were formed by stamping an aluminum plastic film, which were placed to overlap the solid-state battery core, and an edge of the aluminum plastic film was encapsulated to encapsulate the solid-state battery core in the accommodating chamber in the housing to obtain the solid-state battery. The height of the solid-state battery core was substantially consistent with the height of the accommodating chamber of the housing.

### Examples 2-16, the size of the battery core and/or the groove is changed. Reference may be made to Table 1.

In **Example 2**, a method which is basically the same as that in Example 1 is adopted, and a difference lies in that the width of the battery core is changed. Reference made be made to Table 1.

In Example 3, a method which is basically the same as that in Example 1 is adopted, and a difference lies in that the width and height of the battery core are changed. Reference made be made to Table 1.

In Example 4, a method which is basically the same as that in Example 1 is adopted, and a difference lies in that the width of the battery core and height of the slot are changed. Reference made be made to Table 1.

In Example 5, a method which is basically the same as that in Example 1 is adopted, and a difference lies in that the width of the battery core and height of the slot are changed. Reference made be made to Table 1.

In **Examples 6-7**, a method which is basically the same as that in Example 1 is adopted, and a difference lies in that the height of the slot is changed. Reference made be made to Table 1.

In Examples 8-9 and 15-16, a method which is basically the same as that in Example 1 is adopted, and a difference lies in that the width of the battery core and the height of the slot are changed. Reference made be made to Table 1.

In Examples 10-13, a method which is basically the same as that in Example 1 is adopted, and a difference lies in that the width of the battery core, the width of the slot, and the height of the slot are changed. Reference made be made to Table 1.

In Example 14, a method which is basically the same as that in Example 1 is adopted, and a difference lies in that the width of the battery core, the height of the battery core, and the height of the slot are changed. Reference made be made to Table 1.

In **Example 17,** a method which is basically the same as that in Example 1 is adopted, and a difference lies in that in step (4), the number of the positive electrode sheets in the laminate is 1, the positive electrode part only includes one positive electrode layer and one positive tab, and the positive tab is used as the positive tab part, and the aluminum rigid tab is directly adapted; the number of the negative electrode sheets in the laminated body is 1, the negative electrode part only includes one negative electrode layer and one negative tab, and the negative tab is used as a negative tab part, which is directly adapted to the nickel rigid tab.

### Comparative Examples 1-17. A conventional process without an active expansion region.

No active expansion region is disposed in Comparative Examples 1-17 respectively based on Examples 1-17; when the positive electrode slurry was coated in the step S12 of preparing the positive electrode sheet, the height region corresponding to the positive tab slot was not coated with the positive electrode slurry, that is, the region corresponding to the active expansion region of Examples 1-17 was not coated with the positive electrode slurry, and when die cutting was performed in the step S14, the height of the positive tab was kept unchanged, and the region of the positive electrode current collector film not coated with the positive electrode slurry was cut off; and when the negative electrode slurry was coated in the step S22 of preparing the negative electrode sheet, the height region corresponding to the negative tab slot was not coated with the negative electrode slurry, that is, the region corresponding to the active expansion region of Examples 1-17 was not coated with the negative electrode slurry, and when die cutting was performed in the step S24, the height of the negative tab was kept unchanged, and the region of the negative electrode current collector film not coated with the negative electrode slurry was cut off.

### Analytical method

### I. Volume utilization improvement rate contributed by the active expansion region for the solid-state battery.

Volume utilization improvement rate: might be estimated according to the percentage of the area of the active expansion region relative to the area of the electrode sheet active region without the active expansion region.

According to the parameters in Table 1, the volume utilization improvement rate might be calculated by the following formula:
volume utilization improvement rate=(W_{Δ}×H_{Δ})/(W_{Δ}×(H₀₋H_{Δ}))× 100%.

The analytical results might refer to Table 1.

### II. utilization ratio parameter of the active expansion region

1. The utilization ratio of the active expansion region in the Y direction (the height direction of the solid-state battery core) might be estimated according to the following formula: ψ_{Y}=H_{Δ}/H₀×100%.
2. The utilization ratio of the active expansion region in the X direction (the width direction of the solid-state battery core) might be estimated according to the following formula: ψ_{X}=W_{Δ}/W₀×100%%.
3. The two dimensional utilization ratio of the active expansion region might be estimated according to the following formula: ψ_{A}=A_{Δ}/A₀×100%, where the projection area of the solid-state battery core in the Z direction (the thickness direction of the solid-state battery core) was denoted as A₀, and the projection area of the active expansion region in the Z direction is denoted as A_{Δ}, A₀=W₀×H₀, A_{Δ}=H_{Δ}×(W₀-W_{Δ}).

### Analysis results

Compared with Comparative Examples 1-17 in which no active expansion region is disposed, the structural designs of Examples 1-17 may significantly improve the volume utilization ratio of the solid-state battery, thereby improving the volumetric energy density of the battery.

In Examples 1-16, taking the number of stacked positive electrode sheets=the number of positive electrode layers in the positive electrode body=5 as an example, it may be understood that those skilled in the art may replace the number of positive electrode layers with other required number of positive electrode layers according to the thickness of the battery, and the same or substantially the same effect of improving the volumetric energy density of the battery may be achieved, as shown in Example 17.

**Table 1.**

| No. | Width of battery core W₀ (mm) | Height of battery core H₀ (including slot part, not encompassing tab part) (mm) | Width of single slot (mm) | Height H_{Δ} of single slot (equal to the height of the active expansion region in the Y direction) (mm) | Total width W_{Δ} of part other than slot (active expansion region) (mm) | Volume utilization improveme nt rate | ψ_{Y} | ψ_{X} | Ψ_{A} |
|---|---|---|---|---|---|---|---|---|---|
| Example 1 | 50 | 100 | 5 | 0.2 | 40 | 0.16% | 0.2% | 80% | 0.16% |
| Example 2 | 200 | 100 | 5 | 0.2 | 190 | 0.19% | 0.2% | 95% | 0.19% |
| Example 3 | 50 | 50 | 5 | 0.2 | 40 | 0.32% | 0.4% | 80% | 0.32% |
| Example 4 | 50 | 100 | 5 | 0.4 | 40 | 0.32% | 0.4% | 80% | 0.32% |
| Example 5 | 200 | 100 | 5 | 0.4 | 190 | 0.38% | 0.4% | 95% | 0.38% |
| Example 6 | 50 | 100 | 5 | 0.05 | 40 | 0.04% | 0.05% | 80% | 0.04% |
| Example 7 | 50 | 100 | 5 | 1 | 40 | 0.81% | 1% | 80% | 0.80% |
| Example 8 | 200 | 100 | 5 | 0.05 | 190 | 0.05% | 0.05% | 95% | 0.05% |
| Example 9 | 200 | 100 | 5 | 1 | 190 | 0.96% | 1% | 95% | 0.95% |
| Example 10 | 500 | 100 | 10 | 0.05 | 480 | 0.05% | 0.05% | 96% | 0.05% |
| Example 11 | 1000 | 100 | 10 | 0.05 | 980 | 0.05% | 0.05% | 98% | 0.05% |
| Example 12 | 500 | 100 | 10 | 1 | 480 | 0.97% | 1% | 96% | 0.96% |
| Example 13 | 1000 | 100 | 10 | 1 | 980 | 0.99% | 1% | 98% | 0.98% |
| Example 14 | 35 | 200 | 5 | 0.2 | 25 | 0.07% | 0.1% | 71% | 0.07% |
| Example 15 | 25 | 50 | 5 | 0.5 | 15 | 0.61% | 1% | 60% | 0.60% |
| Example 16 | 25 | 50 | 5 | 1 | 15 | 1.22% | 2% | 60% | 1.20% |
| Example 17 | 50 | 100 | 5 | 0.2 | 40 | 0.16% | 0.2% | 80% | 0.16% |

The above descriptions of the various implementations and embodiments tend to emphasize differences between the various implementations and embodiments. For same or similar parts thereof, reference can be made to these embodiments. For brevity, details are not described herein again. The technical features of the above-mentioned implementations and embodiments may be combined arbitrarily, and all possible combinations of the technical features in the above-mentioned embodiments are not described for concise description, however, it should be regarded that the combinations of the technical features are with the range described in the present description as long as there is no inconsistency.

It should be noted that the present application is not limited to the above-described embodiments and examples. The above-described implementations and embodiments are merely examples, and any implementation and embodiment having substantially the same configuration as the technical concept and exhibiting the same operation and effect within the scope of the claims of the present application is included in the technical scope of the present application. The above implementations and embodiments merely illustrate several implementations and embodiments of the present application, which are described in detail, but are not to be construed as limiting the scope of the patent. Furthermore, without departing from the gist of the present application, various modifications that can be conceived by those skilled in the art to the implementations or embodiments, and other modes constructed by combining some constituent elements of the implementations or embodiments, are also included within the scope of the present application.

## Claims

1. A solid-state battery core, comprising a positive electrode part, a solid electrolyte part and a negative electrode part which are stacked, wherein the positive electrode part and the negative electrode part are separated by the solid electrolyte part; the positive electrode part comprises a positive electrode body and a positive tab part connected to the positive electrode body, and the negative electrode part comprises a negative electrode body and a negative tab part connected to the negative electrode body;
a height direction of the solid-state battery core is denoted as a Y direction, a width direction of the solid-state battery core is denoted as an X direction, and a thickness direction of the solid-state battery core is denoted as a Z direction; the X direction, the Y direction, and the Z direction are perpendicular to each other;
at least one edge extending in the X direction, the solid-state battery core is provided with two composite slots, which are respectively denoted as a first composite slot and a second composite slot; and the first composite slot is configured to accommodate at least a part of the positive tab part, and the second composite slot is configured to accommodate at least a part of the negative tab part.

2. The solid-state battery core according to claim 1, wherein in the solid-state battery core, an active region that is consistent with the first composite slot and the second composite slot in height in the Y direction and is located outside the first composite slot and the second composite slot in the X direction is denoted as an active expansion region;
a height of the positive electrode body at the active expansion region is higher than a height of the positive electrode body at the first composite slot, and a height of the negative electrode body at the active expansion region is higher than a height of the negative electrode body at the second composite slot;
a height of the positive electrode body in the Y direction is denoted as H_{P}, a height of the negative electrode body in the Y direction is denoted as H_{N}, and a height of the solid-state battery core in the Y direction is denoted as H₀; and a maximum height of the active expansion region in the Y direction is denoted as H_{Δ}, satisfying H_{Δ}>0; and H_{P}>(H₀-H_{Δ}) and H_{N}>(H₀-H_{Δ}).

3. The solid-state battery core according to claim 2, wherein H_{N} is equal to H₀.

4. The solid-state battery core according to claim 2, wherein a utilization ratio of the active expansion region in the Y direction is ψ_{Y}=H_{Δ}/H₀×100%;
the solid-state battery core satisfies one or more of the following features:${H}_{Δ} \geq 0.05 mm ;$and${ψ}_{Y} \geq 0.05 % .$

5. The solid-state battery core according to claim 4, satisfying one or more of the following features:$0.05 mm \leq {H}_{Δ} \leq 1 mm ;$and$0.1 % \leq {ψ}_{Y} \leq 2 % .$

6. The solid-state battery core according to any one of claims 1 to 5, wherein in the solid-state battery core, an active region that is consistent with the first composite slot and the second composite slot in height in the Y direction and is located outside the first composite slot and the second composite slot in the X direction is denoted as an active expansion region; a width of the solid-state battery core in the X direction is denoted as W₀, a width of the active expansion region in the X direction is denoted as W_{Δ}, and a utilization ratio of the active expansion region in the X direction is ψ_{X}=W_{Δ}/W₀×100%;
the solid-state battery core satisfies one or more of the following features:${H}_{Δ} \geq 50 mm ;$ and$ψ x \geq 60 % .$

7. The solid-state battery core according to claim 6, satisfying one or more of the following features:$50 mm \leq {H}_{Δ} \leq 1000 mm ;$ and $60 % \leq {ψ}_{x} \leq 95 % .$

8. The solid-state battery core according to any one of claims 1 to 7, wherein a projection area of the solid-state battery core in the Z direction is denoted as A₀, a projection area of the active expansion region in the Z direction is denoted as A_{Δ}, and a two dimensional utilization ratio of the active expansion region is ψ_{A}=A_{Δ}/A₀×100%; and
the solid-state battery core satisfies: ψ_{A}≥0.04%.

9. The solid-state battery core according to claim 8, satisfying: 0.04%≤ψ_{A}≤1.5%.

10. The solid-state battery core according to any one of claims 1 to 9, wherein an extension height of the positive tab part in an extended state in the Y direction is greater than a height of the first composite slot in the Y direction; and
an extension height of the negative tab part in an extended state in the Y direction is greater than a height of the second composite slot in the Y direction.

11. The solid-state battery core according to claim 10, wherein the positive tab part comprises a positive tab bending part located in the first composite slot, and the negative tab part comprises a negative tab bending part located in the second composite slot.

12. The solid-state battery core according to any one of claims 1 to 11, wherein a width of the positive tab part in the X direction is less than a width of the first composite slot in the X direction; and a width of the negative tab part in the X direction is less than a width of the second composite slot in the X direction.

13. The solid-state battery core according to claim 12, wherein in the X direction, there is a gap between the positive tab part and each of two side edges of the first composite slot, and there is a gap between the negative tab part and each of two side edges of the second composite slot.

14. The solid-state battery core according to any one of claims 1-13, wherein the solid-state battery core has a laminated structure.

15. The solid-state battery core according to claim 14, wherein the positive electrode body comprises at least one positive electrode layer, each positive electrode layer is provided with slots corresponding to the first composite slot and the second composite slot, respectively, and a positive tab is provided at the slot, corresponding to the first composite slot, in the at least one positive electrode layer;
the negative electrode body comprises at least one negative electrode layer, each negative electrode layer is provided with slots corresponding to the second composite slot and the first composite slot, respectively, and a negative tab is provided at the slot, corresponding to the second composite slot, in the at least one negative electrode layer;
the solid electrolyte part comprises at least one solid electrolyte layer, and any adjacent positive electrode layer and negative electrode layer are separated by the solid electrolyte layer; and each solid electrolyte layer is provided with empty slots corresponding to the first composite slot and the second composite slot, respectively.

16. The solid-state battery core according to claim 15, wherein the positive electrode body comprises at least one positive electrode layer, each positive electrode layer independently comprises a positive electrode current collector layer and a positive electrode active material layer located on at least one side of the positive electrode current collector layer, the positive electrode layer is provided with a positive tab slot, all the positive tab slots in the positive electrode body jointly form a part of the first composite slot, the positive electrode current collector layer in the at least one positive electrode layer is connected to a positive tab at a corresponding positive tab slot, and all the positive tabs connected to the positive electrode body jointly form at least a part of the positive tab part;
the negative electrode body comprises at least one negative electrode layer, each negative electrode layer independently comprises a negative electrode current collector layer and a negative electrode active material layer located on at least one side of the negative electrode current collector layer, the negative electrode layer is provided with a negative tab slot, all the negative tab slots in the negative electrode body jointly form a part of the first composite slot, the negative electrode current collector layer in the at least one negative electrode layer is connected to a negative tab at a corresponding negative tab slot, and all the negative tabs connected to the negative electrode body jointly form at least a part of the negative tab part.

17. The solid-state battery core according to claim 16, wherein there is a plurality of positive electrode layers in the positive electrode body; and the number of the negative electrode layers in the negative electrode body matches the number of the positive electrode layers in the positive electrode body.

18. The solid-state battery core according to claim 17, wherein the plurality of positive electrode layers in the positive electrode body are connected to the positive tab, and the plurality of negative electrode layers in the negative electrode body are connected to the negative tab.

19. A solid-state battery cell, comprising the solid-state battery core according to any one of claims 1 to 18.

20. A solid-state battery, comprising the solid-state battery core according to any one of claims 1 to 18.

21. The solid-state battery according to claim 20, wherein the solid-state battery is an all-solid-state battery.

22. An electrical apparatus, comprising at least one of the solid-state battery core according to any one of claims 1 to 18, the solid-state battery cell according to claim 19, and the solid-state battery according to claim 20 or 21.
